# EUROPEAN PATENT SPECIFICATION

(11) **EP 4 236 120 B1**
(45) Date of publication and mention of the grant of the patent: **25.03.2026**
(21) Application number: 20959267.4
(22) Date of filing: 30.10.2020
(51) Int. Cl.: H04J 3/06, H04W 12/06

(54) **MESSAGE TRANSMISSION METHOD AND APPARATUS**
NACHRICHTENÜBERTRAGUNGSVERFAHREN UND -VORRICHTUNG
PROCÉDÉ ET APPAREIL DE TRANSMISSION DE MESSAGES

(43) Date of publication of application: 30.08.2023
(73) Proprietor: Huawei Technologies Co., Ltd., Shenzhen, Guangdong 518129 (CN)
(72) Inventor: ZHAO, Xuwen, Shenzhen, Guangdong 518129 (CN); HE, Chengdong, Shenzhen, Guangdong 518129 (CN); ZHANG, Bo, Shenzhen, Guangdong 518129 (CN); LI, Fei, Shenzhen, Guangdong 518129 (CN)
(74) Representative: Goddar, Heinz J.
(86) International application number: PCT/CN2020/125566
(87) International publication number: WO 2022/088106

(56) References cited:
- US-A1- 2020 259 896
- NOKIA, NOKIA SHANGHAI BELL: "Requirements for KI on multiple working domains", 3GPP DRAFT; S3-202458, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20201012 - 20201016, 2 October 2020 (2020-10-02), Mobile Competence Centre ; 650, route des Lucioles ; F-06921 Sophia-Antipolis Cedex ; France , XP051937761
- NOKIA, NOKIA SHANGHAI BELL: "Authorization of incoming time synchronization messages based on policies", 3GPP DRAFT; S3-202460, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20201012 - 20201016, 2 October 2020 (2020-10-02), Mobile Competence Centre ; 650, route des Lucioles ; F-06921 Sophia-Antipolis Cedex ; France , XP051937763
- HUAWEI, HISILICON: "TSN working domain and aggregation", 3GPP DRAFT; S2-2002224, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. e-meeting; 20200224 - 20200227, 18 February 2020 (2020-02-18), Mobile Competence Centre ; 650, route des Lucioles ; F-06921 Sophia-Antipolis Cedex ; France , XP051855608

## Description

### TECHNICAL FIELD

This application relates to the communication field, and in particular, to a message transmission method and an apparatus.

### BACKGROUND

Time sensitive networking (time sensitive network, TSN) is a next-generation Ethernet-based network standard, and has functions for ensuring real-time performance, such as time synchronization and delay guarantee, so as to ensure time determinacy for data transmission. The TSN may be divided into different TSN working domains (TSN working domain). Each TSN working domain is identified by a TSN domain number (TSN domain number), and each TSN working domain has a time sensitive network grand master (time sensitive network grand master, TSN GM) device as a clock source.

Currently, a 5G network may serve as a bridge (bridge) of the TSN to transparently transmit a time sensitive network message between a TSN end-station (end-station) and a TSN working domain. A plurality of TSN working domains and TSN end-stations may be deployed on each of a terminal side and a network side of the 5G network. A TSN end-station performs clock synchronization with a TSN working domain based on TSN grand master information. For example, in downlink clock synchronization, a TSN working domain broadcasts a time sensitive network message, where the time sensitive network message includes grand master information and a TSN domain number. A network-side device (for example, a user plane function (user plane function, UPF) or a network-side TSN translator (network-side TSN translator, NW-TT)) of the 5G network sends a time sensitive network message of a TSN working domain to a terminal-side device (for example, user equipment (user equipment, UE) or a device-side TSN translator (device-side TSN translator, DS-TT)). The terminal-side device sends the time sensitive network message to a TSN end-station, and the TSN end-station selects a TSN grand master indicated by a TSN domain number of interest, to perform clock synchronization.

However, a current 5G network cannot check authenticity of a TSN domain number in a time sensitive network message. A TSN working domain may alternatively send a false TSN domain number. Consequently, a TSN end-station may perform clock synchronization based on the false TSN domain number. This causes a system clock synchronization exception, or may even cause a system failure or a network attack. Therefore, how to check authenticity of a TSN domain number in a time sensitive network message is a problem that urgently needs to be resolved.
Nokia, Nokia Shanghai Bell: "Requirements for Kl on multiple working domains", 3GPP Draft; S3-202458, 3rd Generation Partnership Project (3GPP), Mobile Competence Centre ; 650, route des Lucioles ; F-06921 Sophia-Antipolis Cedex ; France, vol. SA WG3, no. e-meeting; 20201012 - 20201016, 2 October 2020 discloses that a malicious node may send a tampered domain number parameter to access other than the intended TSN working domains. This may lead to unauthorized access to the (g)PTP communication within a TSN working domain. Thus, 5GS shall authenticate the sender of incoming time synchronization messages.
Nokia, Nokia Shanghai Bell: "Authorization of incoming time synchronization messages based on policies", 3GPP Draft; S3-202460, 3rd Generation Partnership Project (3GPP), Mobile Competence Centre ; 650, route des Lucioles ; F-06921 Sophia-Antipolis Cedex ; France, vol. SA WG3, no. e-meeting; 20201012 - 20201016, 2 October 2020 discloses that time synchronization messages are received at 5GS network boundaries, i.e. DS-TT or NW-TT ports. They are addressed to a certain TSN working domain, the parameter indicating the TSN working domain is the domain number parameter. The domain number parameter in a time synchronization message and the DS-TT/NW-TT port number, where it is received, could be used for determining the authorization policy. Such a policy could be used to decide whether the message is dropped or further processed.

### SUMMARY

This application provides a message transmission method and an apparatus, to resolve a problem of how to check authenticity of a TSN domain number in a time sensitive network message.

According to a first aspect, this application provides a message transmission method of claim 1. The method may be applied to a first device, or the method may be applied to a communication apparatus capable of supporting a first device in implementing the method. For example, the communication apparatus includes a chip system. The method includes: After receiving a time sensitive network message from a second device through a first communication network, the first device checks, based on a second domain number of a TSN working domain, a first domain number, included in the time sensitive network message, of the TSN working domain, and the first device transmits the time sensitive network message if the check succeeds.

In this way, the first device has the second domain number of the TSN working domain, and the second domain number is valid. When subsequently receiving a new domain number, for example, the first domain number, of the TSN working domain in the time sensitive network message, the first device checks authenticity of the new first domain number of the TSN working domain by using the valid second domain number as a reference. If the check succeeds, it is ensured that a TSN end-station performs clock synchronization with a grand master device in the TSN working domain based on authentic grand master information included in the time sensitive network message. This avoids a problem that the TSN end-station performs clock synchronization by using a forged grand master, causing a clock synchronization exception, a system failure, a network attack to a system, or the like. For example, that the check succeeds means that the first domain number is the same as the second domain number.

Further, the valid domain number may be obtained by configuring, on the first device, a grand master certificate that includes the valid domain number of the TSN working domain.

If the first domain number is different from the second domain number, the first device terminates the current process, or the first device sends a check failure message.

According to the first aspect, before the first device checks the first domain number based on the second domain number of the time sensitive network working domain, the method further includes: The first device determines a grand master device identifier of the time sensitive network working domain; and the first device obtains, based on the grand master device identifier, the second domain number from the grand master device certificate, stored on the first device, of the time sensitive network working domain, where the grand master device certificate includes the grand master device identifier and the second domain number.

In a possible design, before the second domain number is obtained, the method further includes: The first device obtains the grand master device certificate in a process of establishing a security connection to the second device. In this way, security of obtaining the grand master device certificate is further improved.

The grand master device identifier includes at least one of the following: a grand master identifier of a grand master device, a media access control (media access control, MAC) address of the grand master device, an internet protocol (internet protocol, IP) address of the grand master device, a fully qualified domain name (fully qualified domain name, FQDN) of the grand master device, and a port number of the grand master device.

In another possible implementation, before the first device receives the time sensitive network message from the second device through the first communication network, the method further includes: The first device obtains a session identifier of a security connection and a grand master device certificate of the TSN working domain in a process of establishing the security connection to the second device, where the grand master device certificate includes the second domain number, and stores a correspondence between the grand master device certificate and the session identifier. That the first device receives a time sensitive network message from a second device through a first communication network includes: The first device receives the time sensitive network message through the security connection. The method further includes: The first device determines the session identifier based on the time sensitive network message; the first device determines the grand master device certificate based on the session identifier and the correspondence; and the first device obtains the second domain number from the grand master device certificate stored on the first device.

In this way, the first device has the grand master certificate that includes the second domain number, and the second domain number is valid. When subsequently receiving a new domain number, for example, the first domain number, of the TSN working domain in the time sensitive network message, the first device searches for the grand master certificate by using a session identifier of a same security connection through which the grand master certificate and the time sensitive network message are received, and checks authenticity of the new first domain number of the TSN working domain by using the valid second domain number of the TSN working domain included in the grand master certificate as a reference. If the check succeeds, it is ensured that a TSN end-station performs clock synchronization with a grand master device in the TSN working domain based on authentic grand master information included in the time sensitive network message. This avoids a problem that the TSN end-station performs clock synchronization by using a forged grand master, causing a clock synchronization exception, a system failure, a network attack to a system, or the like.

In another possible implementation, the time sensitive network message further includes a token, the token includes the second domain number, and before the first device checks the first domain number based on the second domain number of the time sensitive network working domain, the method further includes: The first device checks integrity of the token (token); and if the integrity check of the token succeeds, the first device performs processing of checking the first domain number based on the second domain number of the time sensitive network working domain; or if the integrity check of the token fails, the first device sends a check failure message.

In this way, the grand master device applies for a token (token) from an authentication and authorization server before sending the time sensitive network message; and the authentication and authorization server checks a token request, and after the check succeeds, feeds back the token including the second domain number of the TSN working domain to the grand master device. The second domain number is valid. The second domain number of the TSN working domain in the token is authentic, and is protected by the token. When subsequently receiving the token and a new domain number, for example, the first domain number, of the TSN working domain in the time sensitive network message, the first device checks authenticity of the new first domain number of the TSN working domain by using the valid second domain number, included in the token, of the TSN working domain as a reference. If the check succeeds, it is ensured that a TSN end-station performs clock synchronization with a grand master device in the TSN working domain based on authentic grand master information included in the time sensitive network message. This avoids a problem that the TSN end-station performs clock synchronization by using a forged grand master, causing a clock synchronization exception, a system failure, a network attack to a system, or the like.

According to a second aspect, this application provides a message transmission method of claim 5. The method may be applied to a first device, or the method may be applied to a communication apparatus capable of supporting a first device in implementing the method. For example, the communication apparatus includes a chip system. The method includes: After receiving a time sensitive network message from a second device through a first communication network, the first device obtains a public key of the second device, and verifies, by using the public key, a digital signature included in the time sensitive network message; and the first device transmits the time sensitive network message if the verification succeeds; or the first device terminates the current process or the first device sends a check failure message if the verification of the digital signature fails. The time sensitive network message includes a first domain number of a time sensitive network working domain, and the digital signature is a signature obtained by the second device by performing integrity protection on a second domain number of the time sensitive network working domain.

According to the second aspect, that the first device obtains a public key of the second device includes: The first device obtains, based on the first domain number, a grand master device certificate of the time sensitive network working domain from a plurality of locally stored grand master device certificates, and obtains the public key from the grand master device certificate of the time sensitive network working domain. The grand master device certificate includes the second domain number of the time sensitive network working domain and the public key.

In another possible implementation, before the first device obtains, based on the first domain number, the grand master device certificate of the time sensitive network working domain from the locally stored grand master device certificates, the method further includes: The first device obtains the grand master device certificate of the time sensitive network working domain in a process of establishing a security connection to the second device.

According to a third aspect, this application provides a message transmission method of claim 8. The method may be applied to a second device, or the method may be applied to a communication apparatus capable of supporting a second device in implementing the method. For example, the communication apparatus includes a chip system. The method includes: The second device signs a second domain number of a time sensitive network working domain by using a private key corresponding to a public key of a grand master device certificate of the time sensitive network working domain, to obtain a digital signature; and the second device sends a time sensitive network message to a first device through a first communication network, where the time sensitive network message includes a first domain number and the digital signature of the time sensitive network working domain.

According to a further aspect, an embodiment of this application further provides a communication apparatus according to claim 10 when performing the method of claim 1. For advantageous effects, refer to the descriptions in the first aspect. Details are not described herein again. The communication apparatus has a function of implementing the behavior in the method example in the first aspect. The function may be implemented by hardware, or may be implemented by hardware executing corresponding software. The hardware or the software includes one or more modules corresponding to the function. In a possible design, the communication apparatus includes a transceiver unit and a processing unit. The transceiver unit is configured to receive a time sensitive network message from a second device through a first communication network, where the time sensitive network message includes a first domain number of a TSN working domain. The processing unit is configured to check the first domain number based on a second domain number of the TSN working domain, and transmit the time sensitive network message by using the transceiver unit if the check succeeds. These units may perform corresponding functions in the method example in the first aspect. For details, refer to the detailed descriptions in the method example. Details are not described herein again.

According to a further aspect, an embodiment of this application further provides a communication apparatus according to claim 10 when performing the method of claim 5. For advantageous effects, refer to the descriptions in the second aspect. Details are not described herein again. The communication apparatus has a function of implementing the behavior in the method example in the second aspect. The function may be implemented by hardware, or may be implemented by hardware executing corresponding software. The hardware or the software includes one or more modules corresponding to the function. In a possible design, the communication apparatus includes a transceiver unit and a processing unit. The transceiver unit is configured to receive a time sensitive network message from a second device through a first communication network, where the time sensitive network message includes a first domain number and a digital signature of a time sensitive network working domain, and the digital signature is a signature obtained by the second device by performing integrity protection on a second domain number of the time sensitive network working domain. The processing unit is configured to obtain a public key of the second device, verify the digital signature by using the public key, and transmit the time sensitive network message by using the transceiver unit if the verification succeeds. These modules may perform corresponding functions in the method example in the second aspect. For details, refer to the detailed descriptions in the method example. Details are not described herein again.

According to an further aspect, an embodiment of this application further provides a communication apparatus according to claim 11. For advantageous effects, refer to the descriptions in the third aspect. Details are not described herein again. The communication apparatus has a function of implementing the behavior in the method example in the third aspect. The function may be implemented by hardware, or may be implemented by hardware executing corresponding software. The hardware or the software includes one or more modules corresponding to the function. In a possible design, the communication apparatus includes a transceiver unit and a processing unit. The processing unit is configured to sign a second domain number of a time sensitive network working domain by using a private key corresponding to a public key of a grand master device certificate of the time sensitive network working domain, to obtain a digital signature. The transceiver unit is configured to send a time sensitive network message to a first device through a first communication network, where the time sensitive network message includes a first domain number and the digital signature of the time sensitive network working domain. These modules may perform corresponding functions in the method example in the third aspect. For details, refer to the detailed descriptions in the method example. Details are not described herein again.

According to a further aspect, a system is provided according to claim 12.

According to a further aspect, a computer program product is provided according to claims 13 and 14.

In this application, the names of the first device, the second device, and the communication apparatus do not constitute a limitation on the devices. During actual implementation, these devices may appear with other names. Provided that functions of the devices are similar to those in this application, the devices fall within the scope of the claims of this application.

### BRIEF DESCRIPTION OF DRAWINGS

FIG. 1 is a schematic diagram of an architecture of a communication system according to an embodiment of this application;
FIG. 2A and FIG. 2B are a flowchart of a message transmission method according to an embodiment of this application;
FIG. 3A and FIG. 3B are a flowchart of another message transmission method according to an embodiment of this application;
FIG. 4A and FIG. 4B are a flowchart of another message transmission method according to an embodiment not part of the claimed invention;
FIG. 5A and FIG. 5B are a flowchart of another message transmission method according to an embodiment not part of the claimed invention;
FIG. 6A, FIG. 6B, and FIG. 6C are a flowchart of another message transmission method according to an embodiment of this application;
FIG. 7A, FIG. 7B, and FIG. 7C are a flowchart of another message transmission method according to an embodiment of this application;
FIG. 8A and FIG. 8B are a flowchart of another message transmission method according to an embodiment of this application;
FIG. 9A and FIG. 9B are a flowchart of another message transmission method according to an embodiment of this application;
FIG. 10A and FIG. 10B are a flowchart of another message transmission method according to an embodiment not part of the claimed invention;
FIG. 11A and FIG. 11B are a flowchart of another message transmission method according to an embodiment not part of the claimed invention;
FIG. 12A and FIG. 12B are a flowchart of another message transmission method according to an embodiment not part of the claimed invention;
FIG. 13A and FIG. 13B are a flowchart of another message transmission method according to an embodiment not part of the claimed invention;
FIG. 14 is a schematic diagram of a structure of a communication apparatus according to an embodiment of this application; and
FIG. 15 is a schematic diagram of a structure of a communication apparatus according to an embodiment of this application.

### DESCRIPTION OF EMBODIMENTS

In this specification, the claims, and the accompanying drawings of this application, the terms "first", "second", "third", and the like are intended to distinguish between different objects but do not limit a particular order.

In embodiments of this application, the terms such as "example" or "for example" are used to represent giving an example, an illustration, or descriptions. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner.

"A plurality of" means two or more, and another quantifier is similar to this. "And/or" describes an association relationship between associated objects and indicates that three relationships may exist. For example, A and/or B may indicate the following three cases: Only A exists, both A and B exist, and only B exists. In addition, an element (element) that appears in singular forms "a", "an", and "the" does not mean "one or only one" unless otherwise specified in the context, but means "one or more". For example, "a device" means one or more such devices. Further, "at least one of (at least one of) ..." means one or any combination of subsequent associated objects. For example, "at least one of A, B, and C" includes A, B, C, AB, AC, BC, or ABC.

The following describes implementations of embodiments of this application in detail with reference to accompanying drawings.

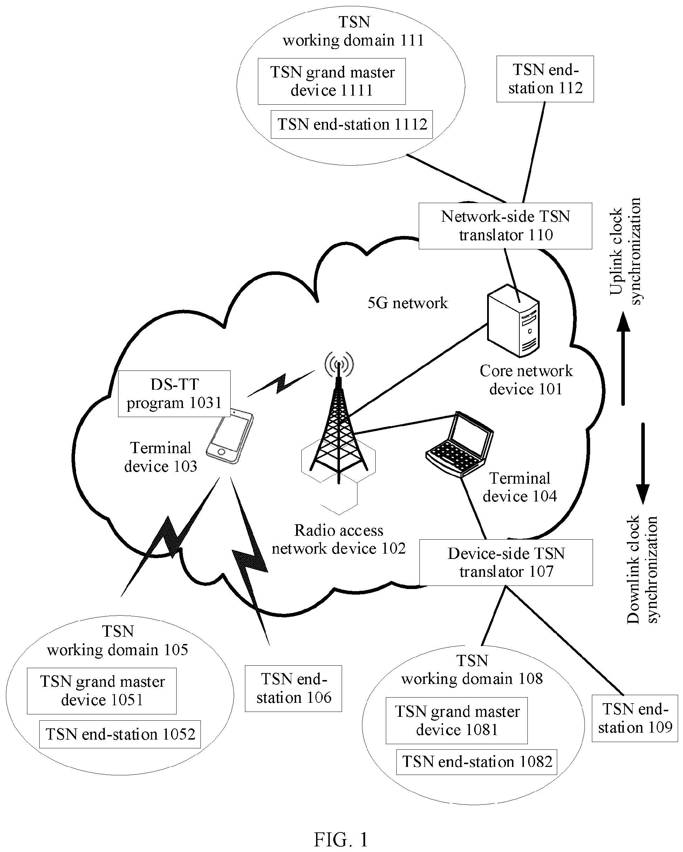

Currently, a 5G network supports time sensitive communication (time sensitive communication, TSC), and may serve as a bridge (bridge) of time sensitive network (time sensitive network, TSN) to transparently transmit a time sensitive network message (for example, a generalized precision time protocol (generalized precision time protocol, gPTP) message and a precision time protocol (precision time protocol, PTP) message). FIG. 1 is a schematic diagram of an architecture of a communication system according to an embodiment of this application. As shown in FIG. 1, a 5G network includes a plurality of core network devices 101 in a core network, a radio access network device 102, and at least one terminal device (for example, a terminal device 103 and a terminal device 104 in FIG. 1). The terminal device is connected to the radio access network device in a wireless manner, and the radio access network device is connected to the core network device in a wireless or wired manner. The core network device and the radio access network device may be different independent physical devices, or functions of the core network device and logical functions of the radio access network device may be integrated into one physical device, or some functions of the core network device and some functions of the radio access network device may be integrated into one physical device. The terminal device may be located at a fixed position, or may be mobile. FIG. 1 is only a schematic diagram. The 5G network may further include another network device, for example, may further include a wireless relay device and a wireless backhaul device that are not shown in FIG. 1.

The core network device includes a core access and mobility management function (core access and mobility management function, AMF) device and a session management function (session management function, SMF) device.

The radio access network device is an access device through which the terminal device accesses the 5G network in a wireless manner, and may be a base station (base station), an evolved NodeB (evolved NodeB, eNodeB), a transmission reception point (transmission reception point, TRP), a next-generation NodeB (next-generation NodeB, gNB) in a 5G mobile communication system, a base station in a future mobile communication system, an access node in a Wi-Fi system, or the like, or may be a module or a unit that performs some functions of a base station, for example, may be a central unit (central unit, CU) or a distributed unit (distributed unit, DU). A specific technology and a specific device form used by the radio access network device are not limited in this embodiment. In this embodiment, the radio access network device is referred to as a network device for short, and a network device refers to a radio access network device, unless otherwise specified.

The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a tablet computer (pad), a computer with a wireless transceiver function, a virtual reality (Virtual Reality, VR) terminal device, an augmented reality (Augmented Reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form used by the terminal device are not limited in this embodiment of this application.

The network device and the terminal device may be deployed on land, including an indoor or outdoor scenario and a handheld or vehicle-mounted scenario, or may be deployed on water, or may be deployed on an airplane, a balloon, and a satellite in the air. An application scenario of the network device and the terminal device is not limited in this embodiment of this application.

The network device and the terminal device may communicate with each other by using a licensed spectrum (licensed spectrum), or may communicate with each other by using an unlicensed spectrum (unlicensed spectrum), or may communicate with each other by using both a licensed spectrum and an unlicensed spectrum. The network device and the terminal device may communicate with each other by using a spectrum below 6 gigahertz (gigahertz, GHz), or may communicate with each other by using a spectrum above 6 GHz, or may communicate with each other by using both a spectrum below 6 GHz and a spectrum above 6 GHz. A spectrum resource used between the network device and the terminal device is not limited in this embodiment of this application.

A plurality of TSN working domains and a plurality of TSN end-stations are further deployed on a terminal side and a network side of the 5G network. A device in the 5G network transmits a message according to the 3rd generation partnership project (3rd Generation Partnership Project, 3GPP) protocol, and a device in a TSN working domain transmits a message by using the institute of electrical and electronics engineers (institute of electrical and electronics engineers, IEEE) 802.1 protocol. Therefore, to transmit a time sensitive network message between a TSN end-station and a TSN working domain through the 5G network, a device-side TSN translator (device-side TSN translator, DS-TT) may be deployed on the terminal side of the 5G network, and a network-side TSN translator (network-side TSN translator, NW-TT) may be deployed on the network side of the 5G network. The DS-TT and the NW-TT are configured to convert a message according to a protocol between a TSN and the 5G network.

In some embodiments, the DS-TT and the NW-TT may be physical devices. A terminal-side device in the 5G network may be connected to the DS-TT, and a plurality of TSN working domains and a plurality of TSN end-stations are connected to the DS-TT. A network-side device in the 5G network may be connected to the NW-TT, and a plurality of TSN working domains and a plurality of TSN end-stations are connected to the NW-TT. In this way, a time sensitive network message can be transmitted between a TSN end-station on the terminal side of the 5G network and a TSN end-station on the network side of the 5G network.

In some other embodiments, the DS-TT and the NW-TT may be software programs. A DS-TT program is installed on the terminal-side device in the 5G network, and an NW-TT program is installed on the network-side device in the 5G network, to implement a function of converting a message according to the protocol between the TSN and the 5G network. A manner of setting the DS-TT and the NW-TT is not limited in this embodiment.

In addition, a TSN working domain includes a TSN end-station and a TSN grand master device. The TSN grand master device is configured to provide a grand master for a TSN end-station, so that the TSN end-station can perform clock synchronization with the TSN working domain. This ensures time determinacy for data transmission. Different TSN working domains are used to implement different functions. For example, a TSN working domain is used to control a device operation during industrial application. For another example, a TSN working domain is used to control a device operation during medical application. A TSN working domain may be identified by using a TSN domain number (TSN domain number). One TSN end-station may access a plurality of DS-TTs or a plurality of NW-TTs, and the TSN end-station may perform clock synchronization with a TSN working domain indicated by one or more TSN domain numbers.

For example, as shown in FIG. 1, a DS-TT program 1031 is installed on the terminal device 103 in the 5G network, and has a function of converting a message according to the protocol between the TSN and the 5G network. The terminal device 103 is connected to a plurality of TSN working domains 105 and a plurality of TSN end-stations 106 in a wireless manner. A TSN working domain 105 includes a TSN grand master device 1051 and a TSN end-station 1052. The terminal device 104 in the 5G network is connected to a device-side TSN translator 107, and the device-side TSN translator 107 is connected to a plurality of TSN working domains 108 and a plurality of TSN end-stations 109. A TSN working domain 108 includes a TSN grand master device 1081 and a TSN end-station 1082. The core network device 101 in the 5G network is connected to a network-side TSN translator 110, and the network-side TSN translator 110 is connected to a plurality of TSN working domains 111 and a plurality of TSN end-stations 112. A TSN working domain 111 includes a TSN grand master device 1111 and a TSN end-station 1112.

It should be noted that a core network device on which NW-TT software is deployed or a core network device connected to an NW-TT physical device may be a device configured to implement a user plane function (user plane function, UPF), or another device in the core network. This is not limited. A quantity of core network devices, a quantity of radio access network devices, a quantity of terminal devices, a quantity of TSN end-stations, and a quantity of TSN working domains are not limited in this embodiment.

The TSN end-station may be a wired terminal or a wireless terminal, for example, a terminal in industrial control (industrial control), a terminal in self-driving (self-driving), a terminal in remote medical surgery (remote medical surgery), a terminal in a smart grid (smart grid). a terminal in transportation safety (transportation safety), a terminal in a smart city (smart city), or a terminal in a smart home (smart home). A specific technology and a specific device form used by the terminal device are not limited in this embodiment of this application.

Embodiments of this application is applicable to downlink clock synchronization and uplink clock synchronization. In the downlink clock synchronization, a sending device is a TSN grand master device (for example, the TSN grand master device 1111) connected to the network-side device in the 5G network, and a corresponding receiving device is a TSN end-station (for example, the TSN end-station 106, the TSN end-station 109, the TSN end-station 1052, or the TSN end-station 1082) connected to the terminal-side device in the 5G network. The TSN end-station performs clock synchronization with the TSN grand master device connected to the network-side device in the 5G network. In the uplink clock synchronization, a sending device is a TSN grand master device (for example, the TSN grand master device 1051 or the TSN grand master device 1081) connected to the terminal-side device in the 5G network, and a corresponding receiving device is a TSN end-station (for example, the TSN end-station 112 or the TSN end-station 1112) connected to the network-side device in the 5G network. The TSN end-station performs clock synchronization with the TSN grand master device connected to the terminal-side device in the 5G network.

To ensure authenticity of clock synchronization between a TSN end-station and a grand master device in a TSN working domain, this application provides a message transmission method. A device in a 5G network first checks a domain number of a TSN working domain, and sends grand master information of the TSN working domain after the check succeeds. The method specifically includes: After a first device receives a time sensitive network message from a second device through a first communication network, the first device checks, based on a second domain number of a TSN working domain, a first domain number, included in the time sensitive network message, of the TSN working domain, and the first device transmits the time sensitive network message if the check succeeds. The time sensitive network message further includes grand master information. The first device may be an ingress device that is in the 5G network and that receives a time sensitive network message, or an egress device that is in the 5G network and that sends a time sensitive network message to a TSN end-station. The second device is a grand master device in the TSN working domain. In this way, it is ensured that the TSN end-station performs clock synchronization with the grand master device in the TSN working domain based on authentic grand master information included in the time sensitive network message. This avoids a problem that the TSN end-station performs clock synchronization by using forged grand master information, causing a clock synchronization exception, a system failure, a network attack to a system, or the like.

The first domain number and the second domain number may be domain numbers of the TSN working domain, or domain numbers of a grand master domain in the TSN working domain. In embodiments of this application, an example in which the first domain number and the second domain number are domain numbers of the TSN working domain is used for description.

It may be understood that, in downlink clock synchronization, if the first communication network is a time sensitive network, the first device is a UPF or an NW-TT (for example, the network-side TSN translator 110 shown in FIG. 1), and the second device is a grand master device (for example, the TSN grand master device 1111 shown in FIG. 1) of a TSN working domain on a network side of the 5G network; or if the first communication network is the 5G network, the first device is UE or a DS-TT (for example, the device-side TSN translator 107 or the terminal device 103 shown in FIG. 1), and the second device is a grand master device (for example, the TSN grand master device 1111 shown in FIG. 1) of a TSN working domain on a network side of the 5G network.

In uplink clock synchronization, if the first communication network is a time sensitive network, the first device is a UE or a DS-TT (for example, the device-side TSN translator 107 shown in FIG. 1), and the second device is a grand master device (for example, the TSN grand master device 1081 shown in FIG. 1) of a TSN working domain on a terminal side of the 5G network; or if the first communication network is the 5G network, the first device is a UPF or an NW-TT (for example, the network-side TSN translator 110 shown in FIG. 1), and the second device is a grand master device (for example, the TSN grand master device 1081 shown in FIG. 1) of a TSN working domain on a terminal side of the 5G network.

The downlink clock synchronization is used as an example below to describe in detail how to check authenticity of a TSN domain number in a time sensitive network message. In embodiments of this application, it is assumed that a connection has been established between a 5G network and a TSN working domain. To be specific, a security connection has been established between UE or a DS-TT and a UPF or an NW-TT through two procedures: 5G bridge information reporting (5G bridge information reporting) and 5G bridge information configuration (5G bridge information configuration), so that a time sensitive network message can be transmitted between TSN end-stations, and a TSN end-station can perform clock synchronization with a grand master device in the TSN working domain. For specific processes of the two procedures, refer to descriptions in 3GPP TS 23.501 and TS 23.502. Details are not described.

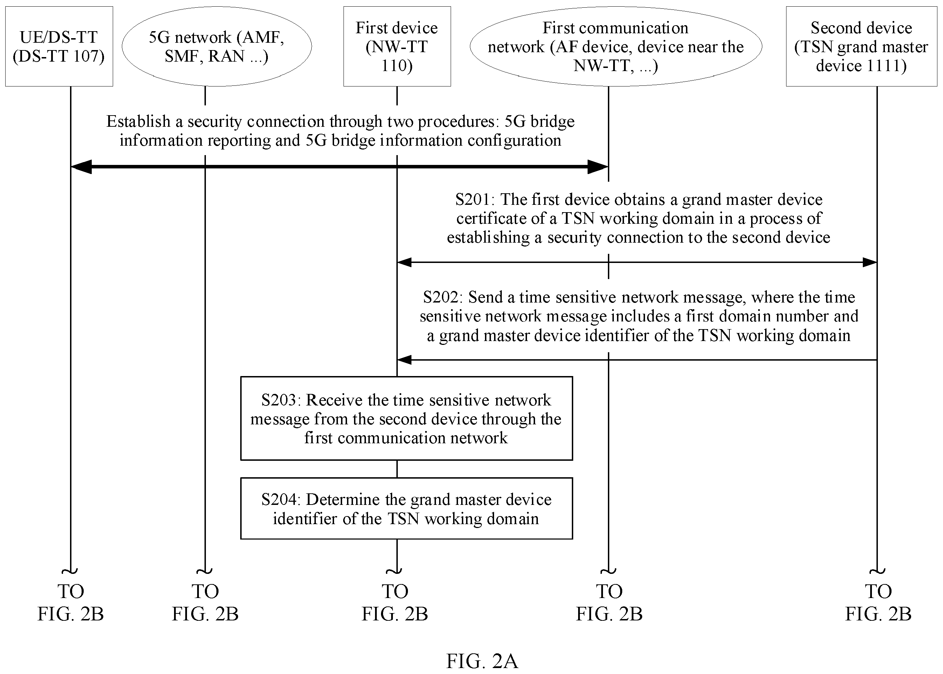

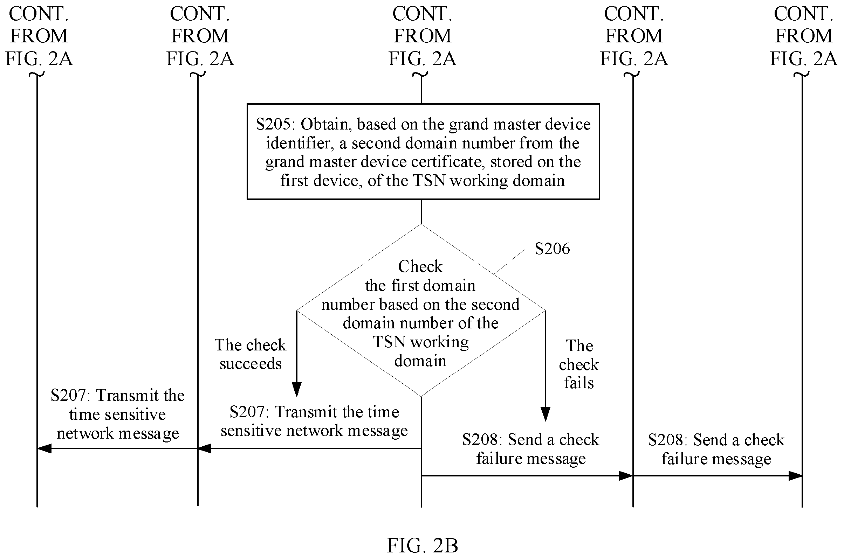

FIG. 2A and FIG. 2B are a flowchart of a message transmission method according to an embodiment. Herein, descriptions are provided by using an example in which a first device is a UPF or an NW-TT, for example, the network-side TSN translator (NW-TT) 110 shown in FIG. 1, and a second device is the TSN grand master device 1111 shown in FIG. 1. As shown in FIG. 2A and FIG. 2B, the method includes the following steps.

S201: The first device obtains a grand master device certificate of a TSN working domain in a process of establishing a security connection to the second device.

The first device and the second device may establish the security connection between the first device and the second device by using the transport layer security (transport layer security, TLS) protocol, so that the first device and the second device transmit a message between two communication applications through the security connection. This provides confidentiality and data integrity for the transmitted message.

In this embodiment, the first device may obtain, in the process of establishing the security connection to the second device, a grand master device certificate of a TSN working domain in which the second device is located. The transport layer security protocol includes the TLS record (TLS record) protocol and the TLS handshake (TLS handshake) protocol. The first device may obtain, in a process of establishing a security connection to the second device by using the TLS handshake protocol, the grand master device certificate of the TSN working domain in which the second device is located. The grand master device certificate includes a grand master device identifier of the TSN working domain in which the second device is located, and a second domain number of the TSN working domain.

It may be understood that both the first device and the second device store the grand master device certificate of the TSN working domain after the first device and the second device establish the security connection and perform mutual authentication through the security connection. Because the grand master device certificate is valid, the second domain number included in the grand master device certificate is an authentic domain number of the TSN working domain. The second device is a grand master device in the TSN working domain, and the grand master device provides grand master information. The grand master device identifier included in the grand master device certificate includes at least one of the following: a grand master identifier of the grand master device, a MAC address of the grand master device, an IP address of the grand master device, a fully qualified domain name of the grand master device, and a port number of the grand master device.

During actual application, the first device may establish security connections to grand master devices in a plurality of TSN working domains, to obtain grand master device certificates of the plurality of TSN working domains. The first device may store correspondences between grand master device identifiers included in the grand master device certificates of the plurality of TSN working domains and corresponding second domain numbers.

In some other embodiments, alternatively, the first device may automatically configure a grand master device certificate of a TSN working domain, or a grand master device certificate of a TSN working domain may be manually configured.

S202: The second device sends a time sensitive network message, where the time sensitive network message includes a first domain number and the grand master device identifier of the TSN working domain.

The second device sends the time sensitive network message, and a plurality of devices in a 5G network may receive the time sensitive network message from the second device.

S203: The first device receives the time sensitive network message from the second device through a first communication network.

It may be understood that, if the first device is the network-side TSN translator (NW-TT) 110 shown in FIG. 1 and the second device is the TSN grand master device 1111 shown in FIG. 1, it indicates that the time sensitive network message is transmitted through a time sensitive network (for example, the TSN working domain 111), so that the NW-TT 110 receives the time sensitive network message from the TSN grand master device 1111, that is, the first communication network is a time sensitive network.

In some embodiments, another device (for example, a device near the NW-TT or a TSN application function (application function, AF) device) may be further deployed between the first device and the second device, that is, the first communication network may further include the device near the NW-TT and/or the TSN AF device. The time sensitive network message is transparently transmitted through the another device, so that the first device receives the time sensitive network message from the second device. If no other device is deployed between the first device and the second device, the first device is directly connected to the second device, the time sensitive network message does not need to be transparently transmitted through another device, and the first device receives the time sensitive network message from the second device.

S204: The first device determines the grand master device identifier of the TSN working domain.

The time sensitive network message includes the grand master device identifier. After receiving the time sensitive network message, the first device obtains the grand master device identifier from the time sensitive network message.

S205: The first device obtains, based on the grand master device identifier, the second domain number from the grand master device certificate, stored on the first device, of the TSN working domain.

The first device queries, from a plurality of grand master device certificates stored on the first device and based on the grand master device identifier, for the grand master device certificate including the grand master device identifier in the time sensitive network message, and obtains the second domain number from the grand master device certificate.

In some embodiments, a correspondence between the grand master device identifier and the second domain number of the TSN working domain may be presented in a form of a table, as shown in Table 1.

**Table 1**

| Grand master device certificate | Grand master device identifier | Domain number |
|---|---|---|
| Certificate 1 | Grand master device identifier 1 | Domain number 1 |
| Certificate 2 | Grand master device identifier 2 | Domain number 2 |
| Certificate 3 | Grand master device identifier 3 | Domain number 3 |

It can be learned from Table 1 that the certificate 1 includes the grand master device identifier 1 and the domain number 1, the certificate 2 includes the grand master device identifier 2 and the domain number 2, and the certificate 3 includes the grand master device identifier 3 and the domain number 3. If the time sensitive network message received by the first device includes the grand master device identifier 2, the first device queries Table 1 based on the grand master device identifier 2, determines the certificate 2 that includes the grand master device identifier 2 and the domain number 2, and then obtains the domain number 2 associated with the grand master device identifier 2 and uses the domain number 2 as the second domain number.

It should be noted that Table 1 shows a storage form of the correspondence between the grand master device identifier and the second domain number of the TSN working domain on a storage device merely in a form of a table, but does not limit a storage form of the correspondence on the storage device. Certainly, the correspondence may alternatively be stored on the storage device in another form. This is not limited in this embodiment of this application.

S206: The first device checks the first domain number based on the second domain number of the TSN working domain.

The first device may compare the first domain number with the second domain number. If the first domain number is the same as the second domain number, it indicates that the check succeeds, and the first domain number included in the time sensitive network message is a valid domain number. If the first domain number is different from the second domain number, it indicates that the check fails, and the first domain number included in the time sensitive network message is an invalid domain number.

If the check succeeds, S207 is performed. If the check fails, the first device discards the time sensitive network message, and the process ends, or the first device performs S208.

S207: The first device transmits the time sensitive network message.

The first device may transmit the time sensitive network message to UE or a DS-TT, that is, a DS-TT (for example, the DS-TT 107) or a terminal device (for example, the terminal device 103) on which a DS-TT program is installed, by using a core network device and a radio access network device in the 5G network. The UE or the DS-TT transmits the time sensitive network message to a TSN end-station, and the TSN end-station performs clock synchronization with the second device based on the grand master information included in the time sensitive network message. The second device is a grand master device in the TSN working domain indicated by the first domain number included in the time sensitive network message.

In this way, the first device has the second domain number of the TSN working domain, and the second domain number is valid. When subsequently receiving a new domain number, for example, the first domain number, of the TSN working domain in the time sensitive network message, the first device checks authenticity of the new first domain number of the TSN working domain by using the valid second domain number as a reference. If the check succeeds, it is ensured that a TSN end-station performs clock synchronization with a grand master device in the TSN working domain based on authentic grand master information included in the time sensitive network message. This avoids a problem that the TSN end-station performs clock synchronization by using a forged grand master, causing a clock synchronization exception, a system failure, a network attack to a system, or the like. For example, that the check succeeds means that the first domain number is the same as the second domain number.

S208: The first device sends a check failure message to the second device.

The check failure message may include a failure cause. In some embodiments, the first device may preconfigure a plurality of failure cause values, and one failure cause value indicates one failure cause. A value of a bit in the check failure message may be used to indicate a failure cause value, to notify the second device that the transmission of the time sensitive network message fails.

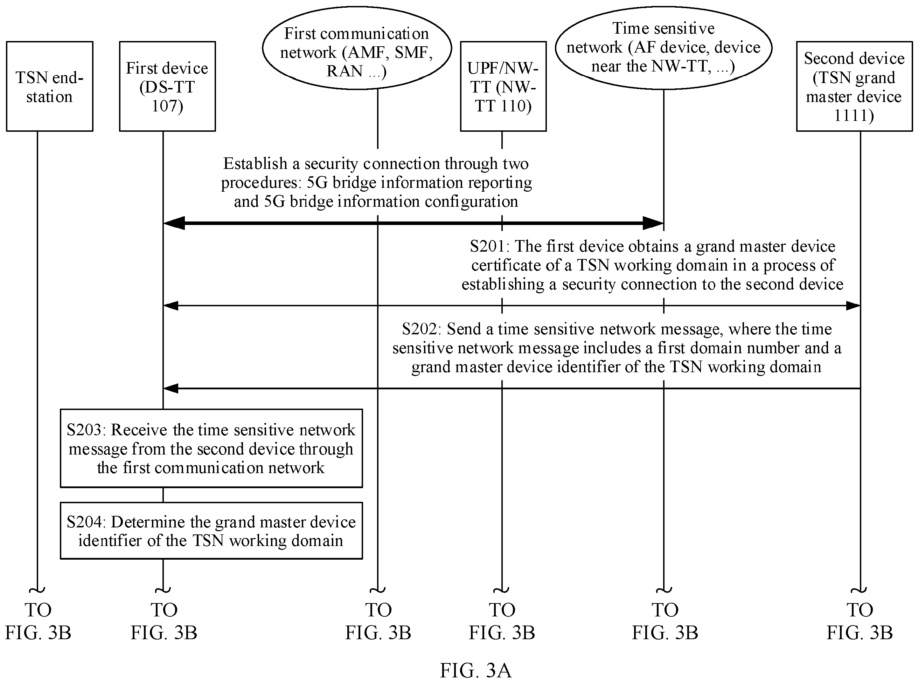

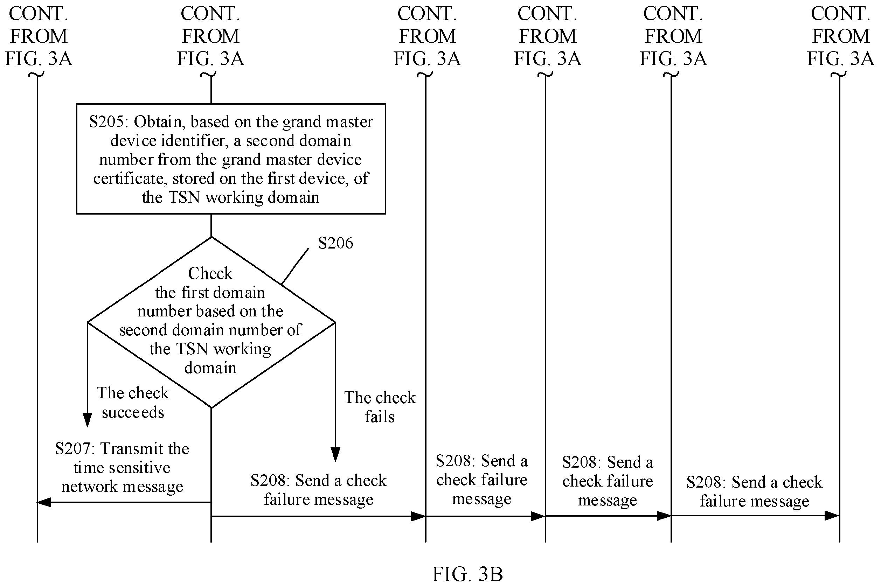

FIG. 3A and FIG. 3B are a flowchart of another message transmission method according to an embodiment. A difference from the embodiment shown in FIG. 2A and FIG. 2B lies in that, an example in which a first device is an ingress device for receiving a time sensitive network message in a 5G network is used for description in FIG. 2A and FIG. 2B, and an example in which a first device is an egress device for receiving a time sensitive network message in a 5G network is used for description in this embodiment. For example, if the first device is a DS-TT (for example, the device-side TSN translator (DS-TT) 107 shown in FIG. 1) or a terminal device (for example, the terminal device 103) on which a DS-TT program is installed and a second device is the TSN grand master device 1111 shown in FIG. 1, it indicates that a time sensitive network message is transmitted through the 5G network, so that the DS-TT 107 receives the time sensitive network message from the TSN grand master device 1111, that is, a first communication network is the 5G network. For detailed explanations of a process of transmitting the time sensitive network message, refer to explanations of related steps in the embodiment shown in FIG. 2A and FIG. 2B.

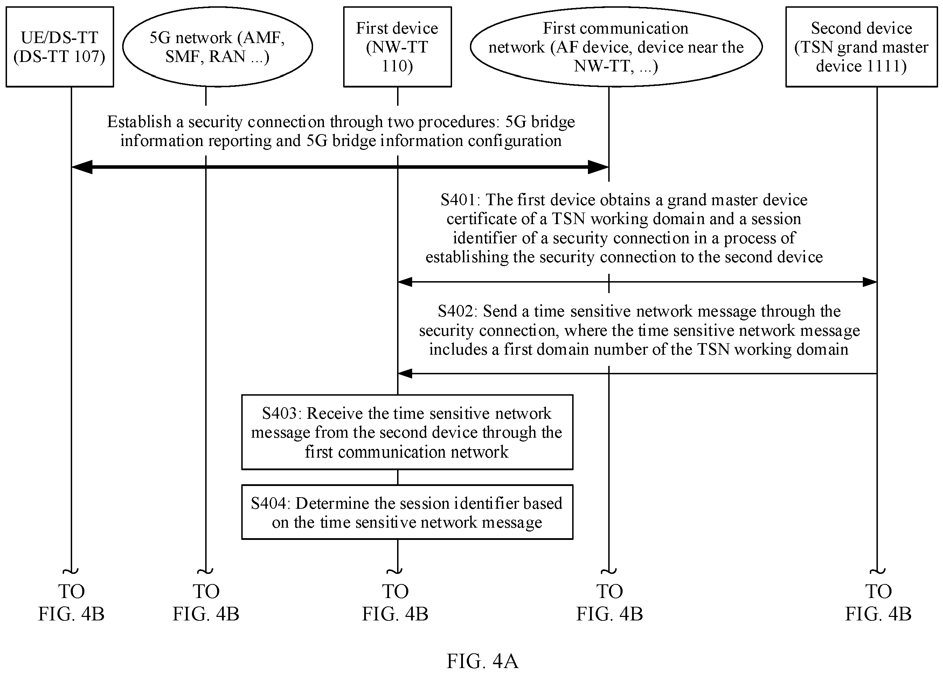

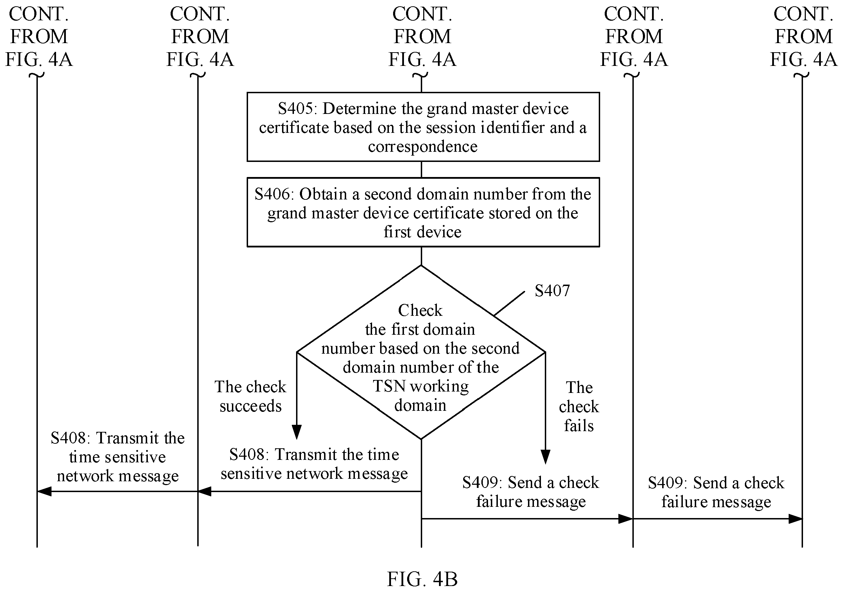

FIG. 4A and FIG. 4B are a flowchart of another message transmission method according to an embodiment not part of the claimed invention. A difference from the embodiment shown in FIG. 2A and FIG. 2B lies in that, in a process of establishing a security connection to a second device, a first device not only obtains a grand master device certificate of a TSN working domain, but also obtains a session identifier of the security connection. The first device obtains, based on the session identifier, a grand master device certificate that includes a second domain number of the TSN working domain, so that the first device checks a first domain number, received from the second device, of the TSN working domain, to ensure authenticity of the first domain number of the TSN working domain. As shown in FIG. 4A and FIG. 4B, the method includes the following steps.

S401: The first device obtains a grand master device certificate of a TSN working domain and a session identifier of a security connection in a process of establishing the security connection to the second device.

It may be understood that both the first device and the second device store the grand master device certificate of the TSN working domain and the session identifier of the security connection after the first device and the second device establish the security connection and perform mutual authentication through the security connection. Because the grand master device certificate is valid, a second domain number included in the grand master device certificate is an authentic domain number of the TSN working domain. For an explanation of the security connection, refer to the descriptions of S201.

S402: The second device sends a time sensitive network message through the security connection, where the time sensitive network message includes a first domain number of the TSN working domain.

S403: The first device receives the time sensitive network message from the second device through a first communication network.

The time sensitive network message is transmitted through the first communication network, and the first device receives the time sensitive network message through the security connection. For explanations of the first communication network and the reception of the time sensitive network message, refer to the descriptions of S203.

S404: The first device determines the session identifier based on the time sensitive network message.

Because an underlying protocol stack carries the session identifier, the first device determines the session identifier based on the time sensitive network message.

S405: The first device determines the grand master device certificate based on the session identifier and a correspondence.

S406: The first device obtains the second domain number from the grand master device certificate stored on the first device.

Because the first device obtains the grand master device certificate through the security connection indicated by the session identifier, the first device stores a correspondence between the session identifier and the grand master device certificate. After the first device obtains the time sensitive network message through the security connection indicated by the session identifier, the first device queries, from a plurality of grand master device certificates stored on the first device and based on the session identifier, for the grand master device certificate associated with the session identifier, and obtains the second domain number from the grand master device certificate.

The correspondence between the grand master device certificate of the TSN working domain and the session identifier may be presented in a form of a table, as shown in Table 2.

**Table 2**

| Grand master device certificate | Session identifier | Domain number |
|---|---|---|
| Certificate 1 | Session identifier 1 | Domain number 1 |
| Certificate 2 | Session identifier 2 | Domain number 2 |
| Certificate 3 | Session identifier 3 | Domain number 3 |

It can be learned from Table 2 that the certificate 1 includes the domain number 1 and the certificate 1 is associated with the session identifier 1, the certificate 2 includes the domain number 2 and the certificate 2 is associated with the session identifier 2, and the certificate 3 includes the domain number 3 and the certificate 3 is associated with the session identifier 3. If the first device receives the time sensitive network message through a security connection indicated by the session identifier 2, the first device queries Table 2 based on the session identifier 2, determines that a grand master device certificate, associated with the session identifier 2, of the TSN working domain is the certificate 2, and then uses the domain number 2 included in the certificate 2 as the second domain number.

It should be noted that Table 2 shows a storage form of the correspondence between the grand master device certificate of the TSN working domain and the session identifier on a storage device merely in a form of a table, but does not limit a storage form of the correspondence on the storage device. Certainly, the correspondence may alternatively be stored on the storage device in another form.

S407: The first device checks the first domain number based on the second domain number of the TSN working domain.

If the check succeeds, S408 is performed. If the check fails, the first device discards the time sensitive network message, and the process ends, or the first device performs S409.

S408: The first device transmits the time sensitive network message.

S409: The first device sends a check failure message to the second device.

For detailed explanations of S407 to S409, refer to the descriptions of S206 to S208.

In this way, the first device has the grand master certificate that includes the second domain number, and the second domain number is valid. When subsequently receiving a new domain number, for example, the first domain number, of the TSN working domain in the time sensitive network message, the first device searches for the grand master certificate by using a session identifier of a same security connection through which the grand master certificate and the time sensitive network message are received, and checks authenticity of the new first domain number of the TSN working domain by using the valid second domain number of the TSN working domain included in the grand master certificate as a reference. If the check succeeds, it is ensured that a TSN end-station performs clock synchronization with a grand master device in the TSN working domain based on authentic grand master information included in the time sensitive network message. This avoids a problem that the TSN end-station performs clock synchronization by using a forged grand master, causing a clock synchronization exception, a system failure, a network attack to a system, or the like.

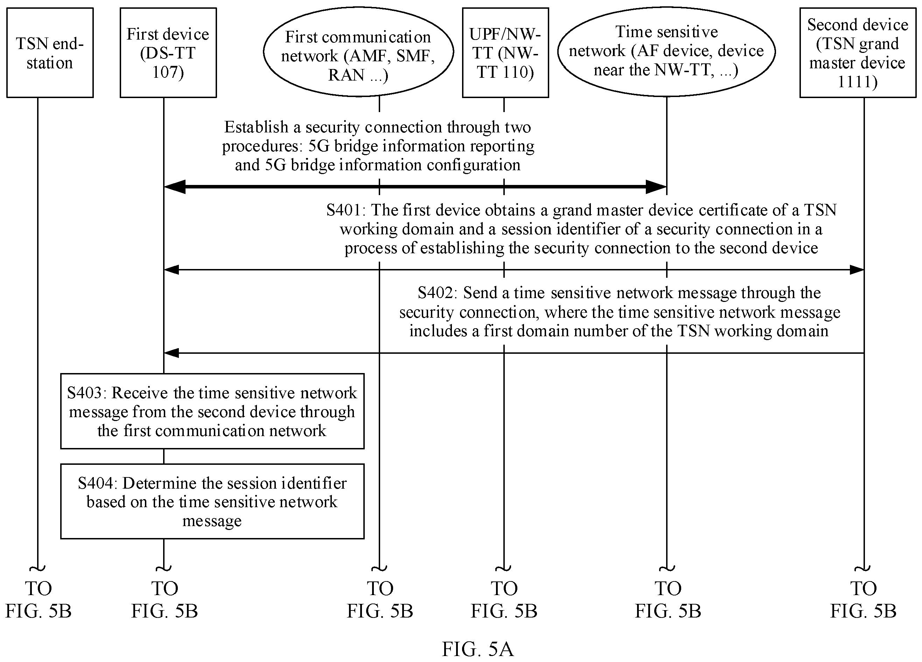

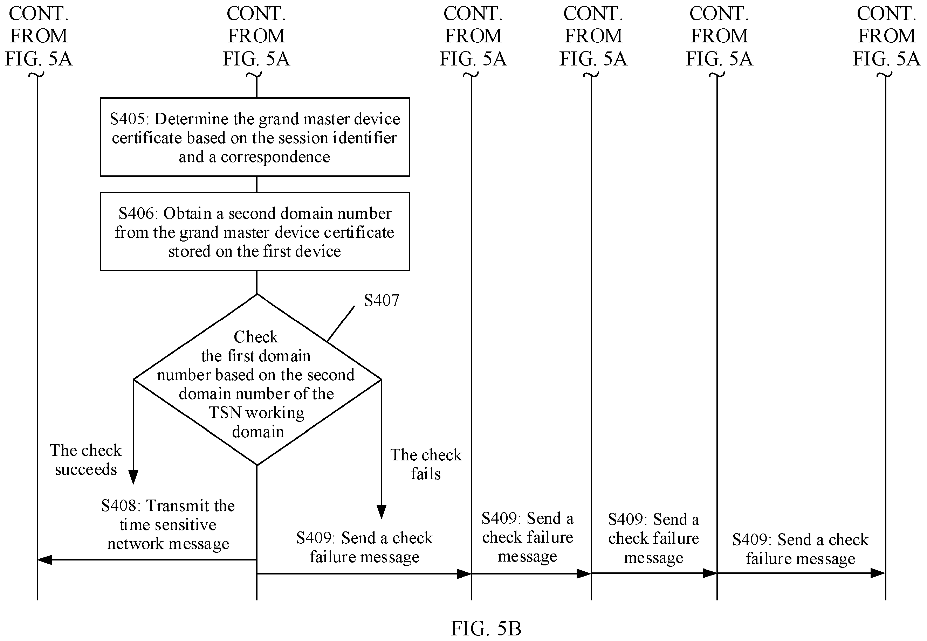

FIG. 5A and FIG. 5B are a flowchart of another message transmission method according to an embodiment not part of the invention. A difference from the embodiment shown in FIG. 4A and FIG. 4B lies in that, an example in which a first device is an ingress device for receiving a time sensitive network message in a 5G network is used for description in FIG. 4A and FIG. 4B, and an example in which a first device is an egress device for receiving a time sensitive network message in a 5G network is used for description in this embodiment. For example, if the first device is a DS-TT (for example, the device-side TSN translator (DS-TT) 107 shown in FIG. 1) or a terminal device (for example, the terminal device 103) on which a DS-TT program is installed and a second device is the TSN grand master device 1111 shown in FIG. 1, it indicates that a time sensitive network message is transmitted through the 5G network, so that the DS-TT 107 receives the time sensitive network message from the TSN grand master device 1111, that is, a first communication network is the 5G network. For detailed explanations of a process of transmitting the time sensitive network message, refer to explanations of related steps in the embodiment shown in FIG. 4A and FIG. 4B.

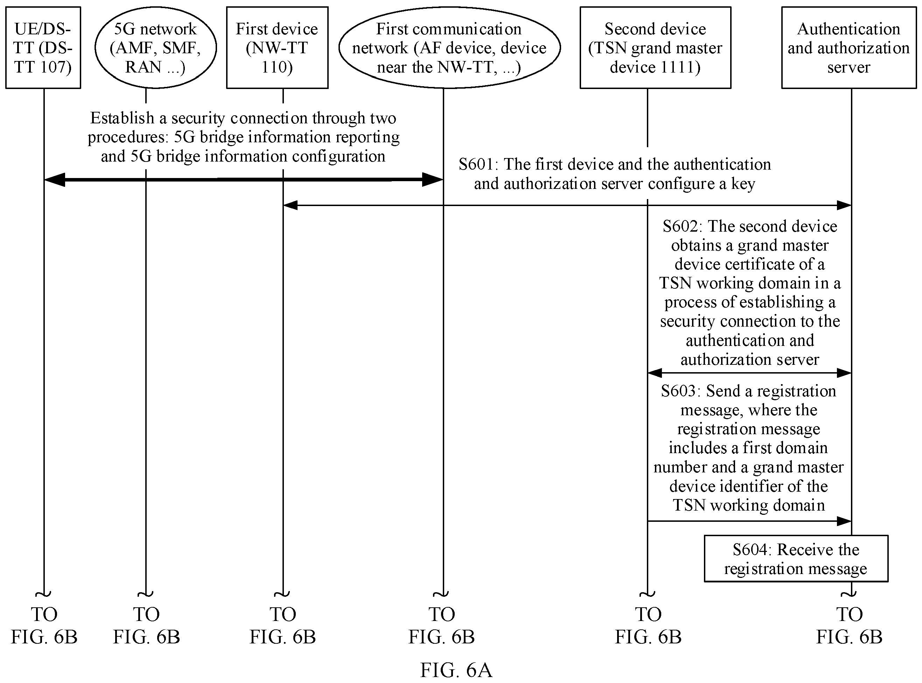

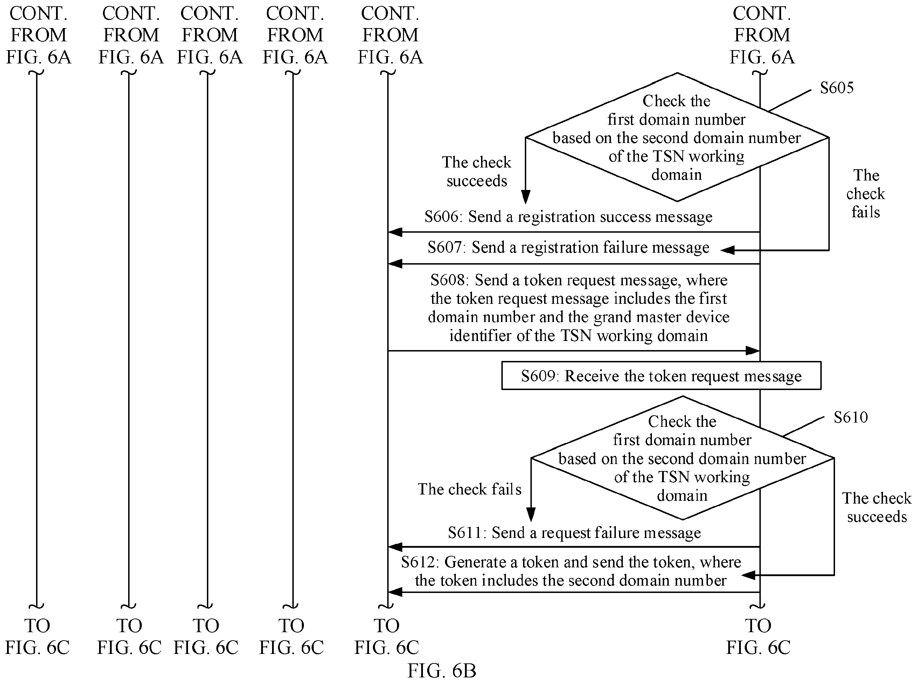

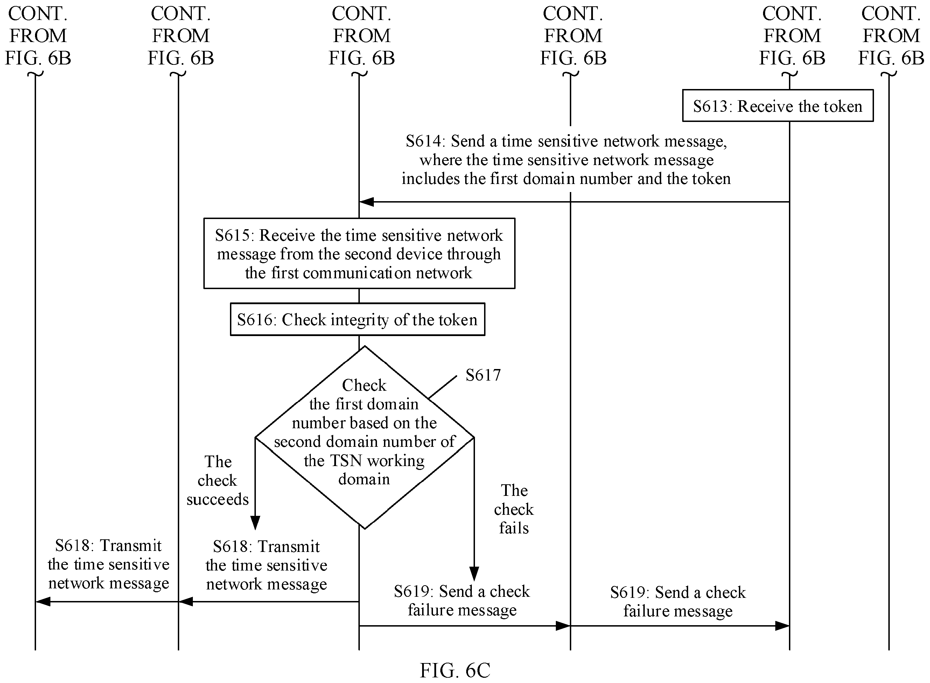

FIG. 6A, FIG. 6B, and FIG. 6C are a flowchart of another message transmission method according to an embodiment. A difference from the foregoing embodiments lies in that a time sensitive network message obtained by a first device in a process of establishing a security connection to a second device not only includes a first domain number of a TSN working domain, but also includes a token, where the token includes a second domain number of the TSN working domain, so that the first device checks the first domain number of the TSN working domain by using the token, to ensure authenticity of the first domain number, received by the first device, of the TSN working domain. As shown in FIG. 6A, FIG. 6B, and FIG. 6C, the method includes the following steps.

S601: The first device and an authentication and authorization server configure a key.

The first device and the authentication and authorization server each configure a shared key between the first device and the authentication and authorization server. Alternatively, the first device configures a public key for the authentication and authorization server, and the authentication and authorization server configures a public key/private key pair for the authentication and authorization server.

S602: The second device obtains a grand master device certificate of a TSN working domain in a process of establishing a security connection to the authentication and authorization server.

The grand master device certificate of the TSN working domain includes a second domain number of the TSN working domain. It may be understood that both the second device and the authentication and authorization server store the grand master device certificate of the TSN working domain and a session identifier of the security connection after the second device and the authentication and authorization server establish the security connection and perform mutual authentication through the security connection. Because the grand master device certificate is valid, the second domain number included in the grand master device certificate is an authentic domain number of the TSN working domain. For an explanation of the security connection, refer to the descriptions of S201.

S603: The second device sends a registration message to the authentication and authorization server, where the registration message includes a first domain number and a grand master device identifier of the TSN working domain.

S604: The authentication and authorization server receives the registration message sent by the second device.

S605: The authentication and authorization server checks the first domain number based on the second domain number of the TSN working domain.

If the grand master device certificate of the TSN working domain includes the grand master device identifier, the authentication and authorization server may obtain, based on the grand master device identifier in the registration message, the grand master device certificate of the TSN working domain from a plurality of grand master device certificates stored on the authentication and authorization server, and then obtain the second domain number from the grand master device certificate of the TSN working domain. For a specific process, refer to the detailed descriptions of the embodiment shown in FIG. 2A and FIG. 2B.

If the authentication and authorization server stores a correspondence between the session identifier of the security connection and the grand master device certificate of the TSN working domain, the authentication and authorization server may obtain, based on the session identifier of the security connection, the grand master device certificate, associated with the session identifier, of the TSN working domain from a plurality of grand master device certificates stored on the authentication and authorization server, and then obtain the second domain number from the grand master device certificate of the TSN working domain.

The authentication and authorization server checks the first domain number based on the second domain number of the TSN working domain. If the check succeeds, the authentication and authorization server determines that registration succeeds, and performs S606. If the check fails, the authentication and authorization server determines that registration fails, the authentication and authorization server discards the registration message, and the process ends, or the authentication and authorization server performs S607. For a detailed explanation of checking the first domain number by using the second domain number, refer to the descriptions of S206.

S606: The authentication and authorization server sends a registration success message to the second device.

S607: The authentication and authorization server sends a registration failure message to the second device.

S608: The second device sends a token request message to the authentication and authorization server, where the token request message includes the first domain number and the grand master device identifier of the TSN working domain.

S609: The authentication and authorization server receives the token request message sent by the second device.

S610: The authentication and authorization server checks the first domain number in the token request message based on the second domain number of the TSN working domain.

If the check fails, the authentication and authorization server discards the token request message, and the process ends, or the authentication and authorization server performs S611. If the check succeeds, the authentication and authorization server performs S612.

S611: The authentication and authorization server sends a request failure message to the second device.

For detailed explanations of S610 and S611, refer to the descriptions of S206 and S207.

S612: The authentication and authorization server generates a token and sends the token to the second device, where the token includes the second domain number and the grand master device identifier.

S613: The second device receives the token from the authentication and authorization server.

S614: The second device sends a time sensitive network message to the first device, where the time sensitive network message includes the first domain number and the token.

S615: The first device receives the time sensitive network message from the second device through a first communication network.

S616: The first device checks integrity of the token.

Because a same key is configured for the first device and the authentication and authorization server, the first device performs integrity check on the token by using the shared key of the authentication and authorization server or the public key of the authentication and authorization server, to ensure authenticity of the second domain number included in the token.

If the integrity check of the token succeeds, S617 is performed. If the integrity check of the token fails, the first device discards the time sensitive network message, and the process ends, or the first device performs S619.

S617: The first device checks the first domain number in the time sensitive network message based on the second domain number of the TSN working domain in the token.

If the check succeeds, S618 is performed. If the check fails, the first device discards the time sensitive network message, and the process ends, or the first device performs S619.

S618: The first device transmits the time sensitive network message.

S619: The first device sends a check failure message to the second device.

For detailed explanations of S617 to S619, refer to the descriptions of S206 to S208.

In this way, a grand master device applies for a token (token) from the authentication and authorization server before sending a time sensitive network message; and the authentication and authorization server checks a token request, and after the check succeeds, feeds back a token including the second domain number of the TSN working domain to the grand master device. The second domain number is valid. The second domain number of the TSN working domain in the token is authentic, and is protected by the token. When subsequently receiving the token and a new domain number, for example, the first domain number, of the TSN working domain in a time sensitive network message, the first device checks authenticity of the new first domain number of the TSN working domain by using the valid second domain number, included in the token, of the TSN working domain as a reference. If the check succeeds, it is ensured that a TSN end-station performs clock synchronization with the grand master device in the TSN working domain based on authentic grand master information included in the time sensitive network message. This avoids a problem that the TSN end-station performs clock synchronization by using a forged grand master, causing a clock synchronization exception, a system failure, a network attack to a system, or the like.

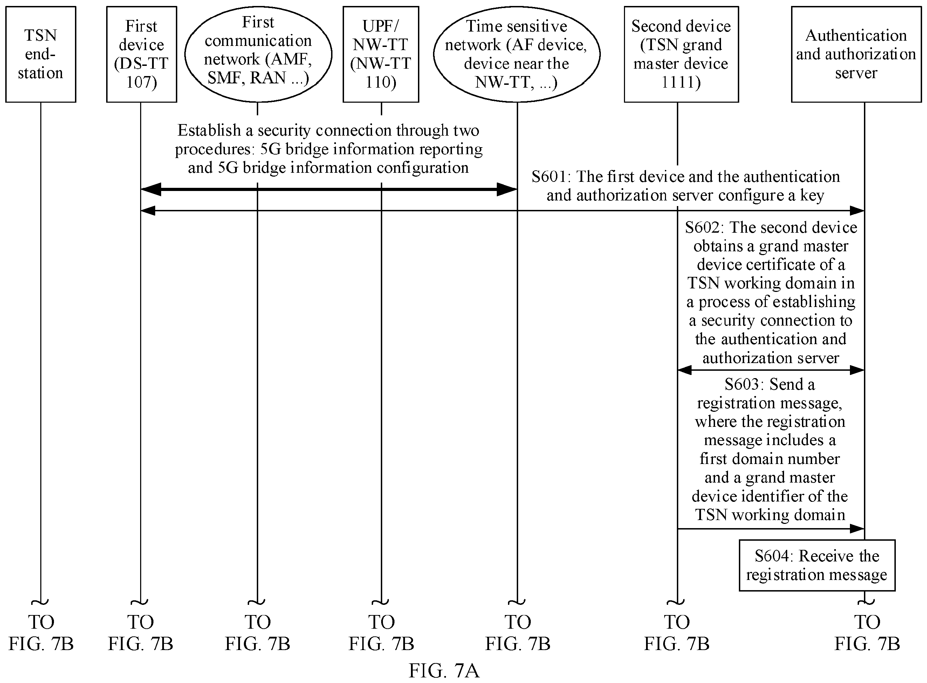

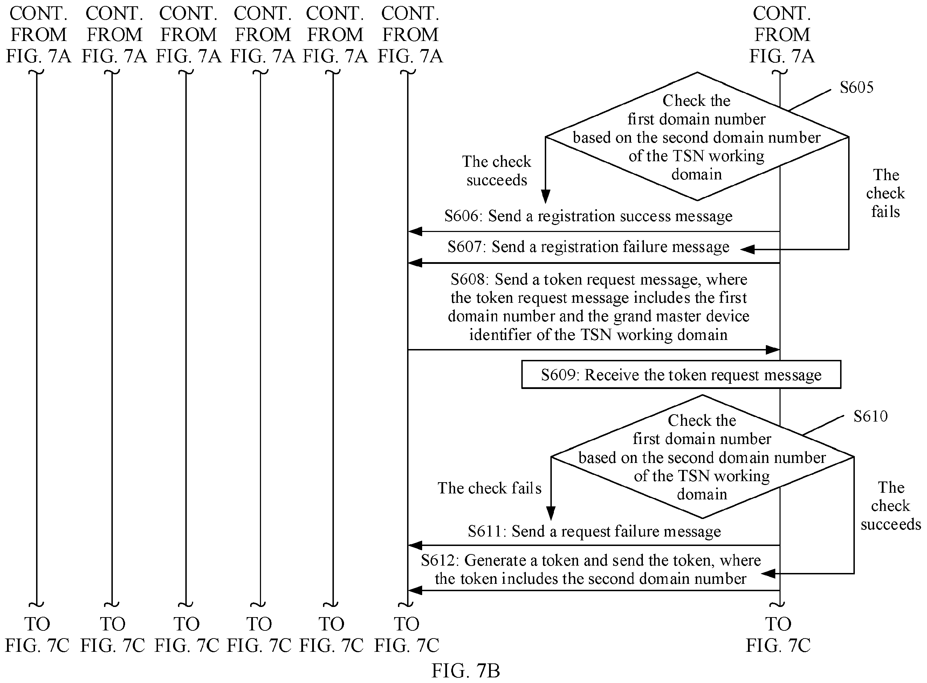

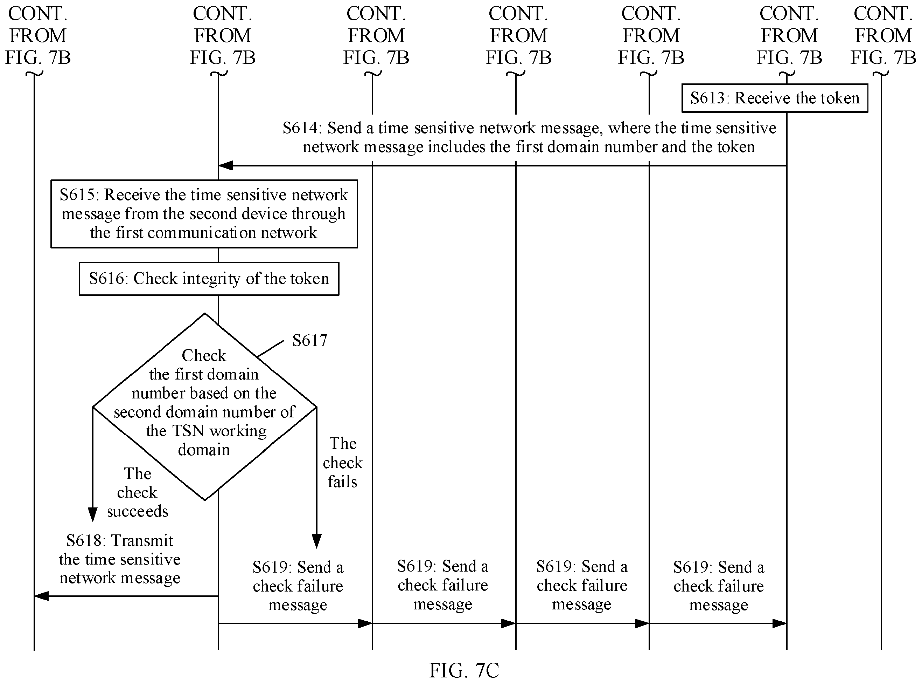

FIG. 7A, FIG. 7B, and FIG. 7C are a flowchart of another message transmission method according to an embodiment. A difference from the embodiment shown in FIG. 6A, FIG. 6B, and FIG. 6C lies in that, an example in which a first device is an ingress device for receiving a time sensitive network message in a 5G network is used for description in FIG. 6A, FIG. 6B, and FIG. 6C, and an example in which a first device is an egress device for receiving a time sensitive network message in a 5G network is used for description in this embodiment. For example, if the first device is a DS-TT (for example, the device-side TSN translator (DS-TT) 107 shown in FIG. 1) or a terminal device (for example, the terminal device 103) on which a DS-TT program is installed and a second device is the TSN grand master device 1111 shown in FIG. 1, it indicates that a time sensitive network message is transmitted through the 5G network, so that the DS-TT 107 receives the time sensitive network message from the TSN grand master device 1111, that is, a first communication network is the 5G network. For detailed explanations of a process of transmitting the time sensitive network message, refer to explanations of related steps in the embodiment shown in FIG. 6A, FIG. 6B, and FIG. 6C.

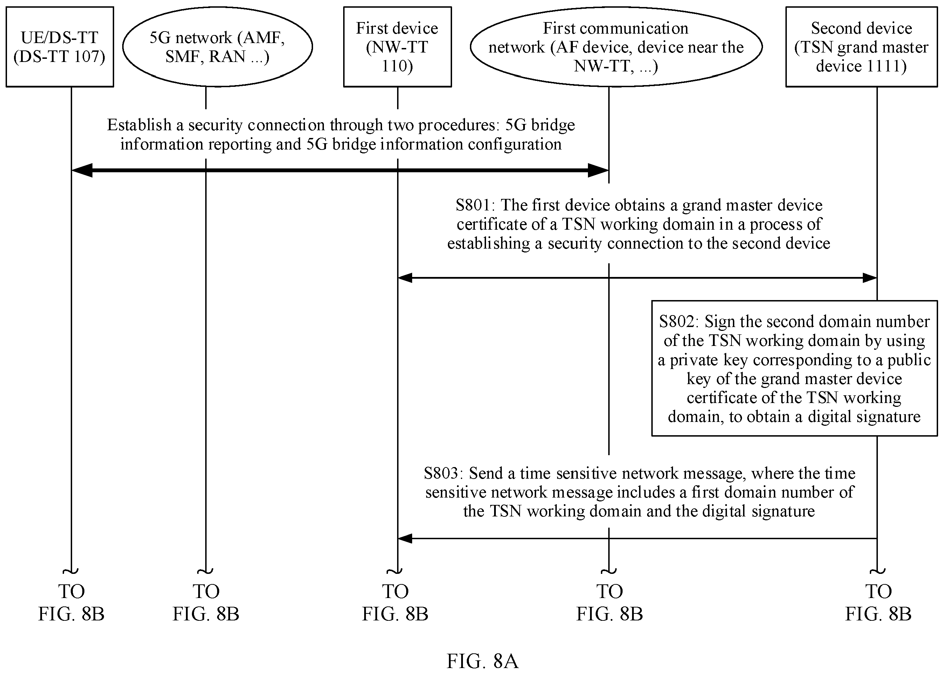

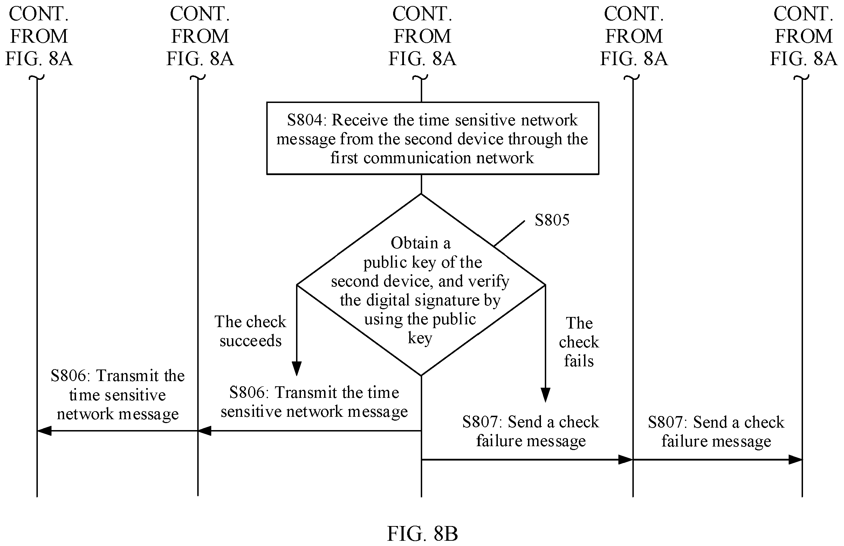

FIG. 8A and FIG. 8B are a flowchart of another message transmission method according to an embodiment. A difference from the foregoing embodiments lies in that a second device signs a second domain number of a TSN working domain by using a private key corresponding to a public key of a grand master device certificate of the TSN working domain, so that a first device verifies the signature, to ensure authenticity of a first domain number, received by the first device, of the TSN working domain. As shown in FIG. 8A and FIG. 8B, the method includes the following steps.

S801: The first device obtains a grand master device certificate of a TSN working domain in a process of establishing a security connection to the second device.

The first device may establish, to the second device, the security connection between the first device and the second device by using the TLS protocol, and obtain the grand master device certificate of the TSN working domain. The grand master device certificate of the TSN working domain includes a second domain number of the TSN working domain. It may be understood that both the second device and an authentication and authorization server store the grand master device certificate of the TSN working domain and a session identifier of a security connection after the second device and the authentication and authorization server establish the security connection and perform mutual authentication through the security connection. Because the grand master device certificate is valid, the second domain number included in the grand master device certificate is an authentic domain number of the TSN working domain. For a specific explanation, refer to the descriptions of S201 in the embodiment shown in FIG. 2A and FIG. 2B.

S802: The second device signs the second domain number of the TSN working domain by using a private key corresponding to a public key of the grand master device certificate of the TSN working domain, to obtain a digital signature. The digital signature is a signature obtained by the second device by performing integrity protection on the second domain number of the TSN working domain.

S803: The second device sends a time sensitive network message to the first device through a first communication network, where the time sensitive network message includes a first domain number of the TSN working domain and the digital signature.

S804: The first device receives the time sensitive network message from the second device through the first communication network.

S805: The first device obtains a public key of the second device, and verifies the digital signature by using the public key.

The first device obtains, based on the first domain number, the grand master device certificate of the TSN working domain from a plurality of locally stored grand master device certificates, where the grand master device certificate includes the second domain number of the TSN working domain and the public key. The first device obtains the public key from the grand master device certificate of the TSN working domain, and verifies the digital signature by using the public key.

In some embodiments, if the first domain number is the same as the second domain number, the first device may find, based on the first domain number, a grand master device certificate corresponding to the second domain number that is the same as the first domain number, and verification performed by the first device on the digital signature by using a public key of the grand master device certificate succeeds.

In some other embodiments, if the first domain number is different from the second domain number, the first device may find, based on the first domain number, a grand master device certificate that includes the first domain number, and verification performed by the first device on the digital signature by using a public key of the grand master device certificate that includes the first domain number fails. Alternatively, the first device cannot find a grand master device certificate based on the first domain number. In this way, if the first domain number masquerades as the authentic second domain number, accuracy of the check is further ensured through verification on the digital signature.

If the verification succeeds, S806 is performed. If the verification fails, the first device discards the time sensitive network message, and the process ends, or the first device performs S807.

S806: The first device transmits the time sensitive network message.

S807: The first device sends a check failure message to the second device.

For detailed explanations of S806 and S807, refer to the descriptions of S207 and S208.

In this way, a time sensitive network message sent by a grand master device includes the digital signature of the valid second domain number of the TSN working domain. When subsequently receiving the new first domain number of the TSN working domain in a time sensitive network message, a device in a 5G network searches for a grand master device certificate based on the new first domain number of the TSN working domain, and verifies the signature by using the grand master device certificate. If the new domain number of the TSN working domain in the time sensitive network message is false, the device in the 5G network cannot find a correct grand master device certificate based on the false domain number. As a result. the verification based on the grand master device certificate fails, and it can be found that the new domain number of the TSN working domain is forged. Authenticity of the new first domain number of the TSN working domain is checked by using the valid second domain number of the TSN working domain as a reference. If the check succeeds, it is ensured that a TSN end-station performs clock synchronization with the grand master device in the TSN working domain based on authentic grand master information included in the time sensitive network message. This avoids a problem that the TSN end-station performs clock synchronization by using a forged grand master, causing a clock synchronization exception, a system failure, a network attack to a system, or the like.

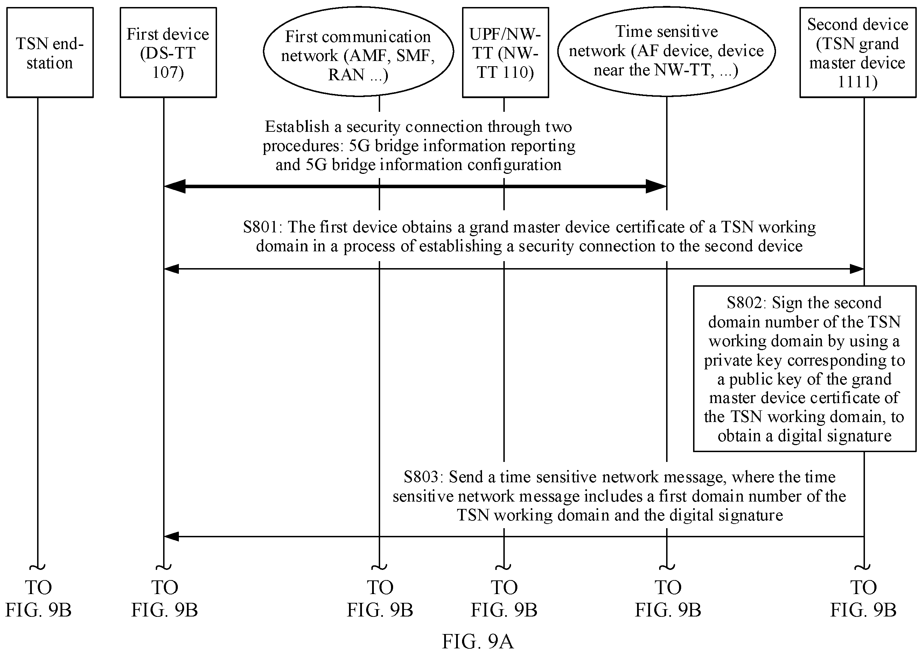

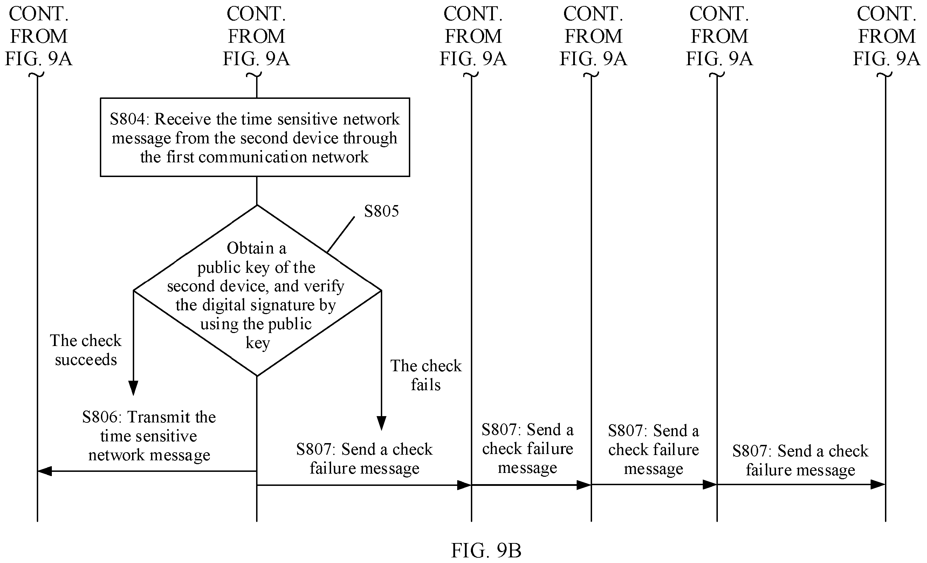

FIG. 9A and FIG. 9B are a flowchart of another message transmission method according to an embodiment. A difference from the embodiment shown in FIG. 8A and FIG. 8B lies in that, an example in which a first device is an ingress device for receiving a time sensitive network message in a 5G network is used for description in FIG. 8A and FIG. 8B, and an example in which a first device is an egress device for receiving a time sensitive network message in a 5G network is used for description in this embodiment. For example, if the first device is a DS-TT (for example, the device-side TSN translator (DS-TT) 107 shown in FIG. 1) or a terminal device (for example, the terminal device 103) on which a DS-TT program is installed and a second device is the TSN grand master device 1111 shown in FIG. 1, it indicates that a time sensitive network message is transmitted through the 5G network, so that the DS-TT 107 receives the time sensitive network message from the TSN grand master device 1111, that is, a first communication network is the 5G network. For detailed explanations of a process of transmitting the time sensitive network message, refer to explanations of related steps in the embodiment shown in FIG. 8A and FIG. 8B.

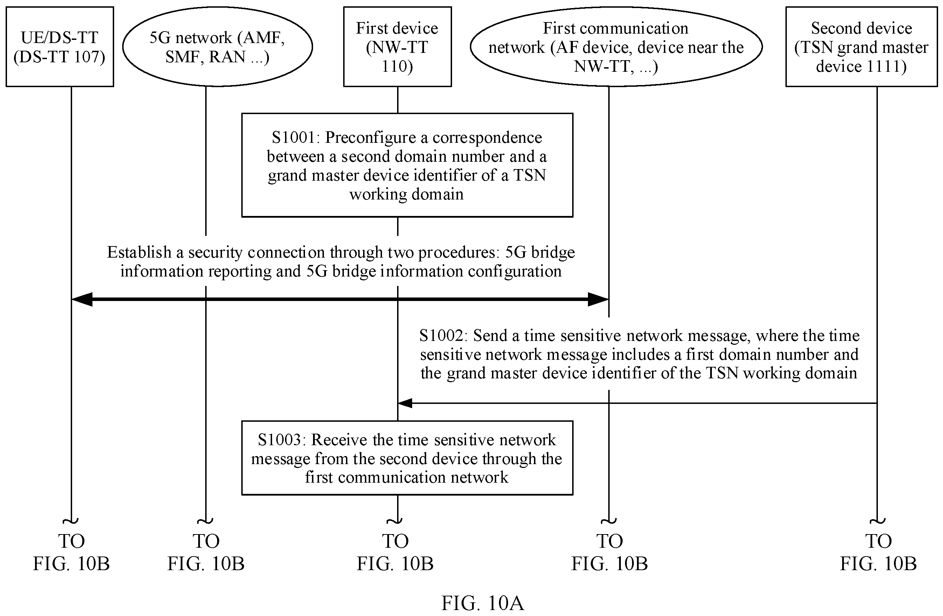

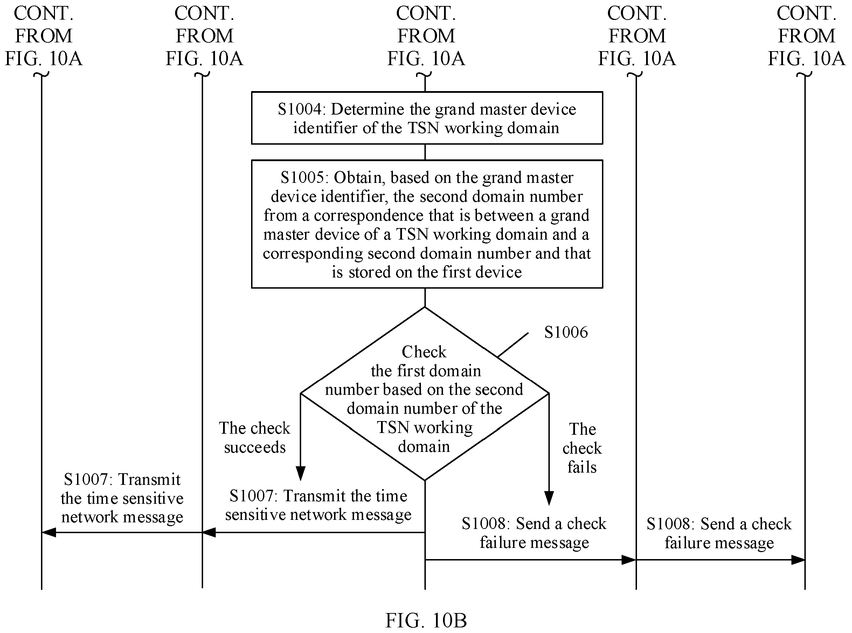

FIG. 10A and FIG. 10B are a flowchart of a message transmission method according to an embodiment not part of the claimed invention. A difference from the embodiment shown in FIG. 2A and FIG. 2B lies in that a first device preconfigures a correspondence between a second domain number and a grand master device identifier of a TSN working domain, so that the first device queries for the second domain number of the TSN working domain based on the grand master device identifier, and checks a first domain number, received from a second device, of the TSN working domain, to ensure authenticity of the first domain number of the TSN working domain. As shown in FIG. 10A and FIG. 10B, the method includes the following steps.

S1001: The first device preconfigures a correspondence between a second domain number and a grand master device identifier of a TSN working domain.

The first device may automatically configure the correspondence between the second domain number and the grand master device identifier of the TSN working domain, or the correspondence between the second domain number and the grand master device identifier of the TSN working domain may be manually configured.

The second domain number is an authentic domain number of the TSN working domain. The second device is a grand master device in the TSN working domain, and the grand master device provides grand master information. The grand master device identifier includes at least one of the following: a grand master identifier of the grand master device, a MAC address of the grand master device, an IP address of the grand master device, a fully qualified domain name of the grand master device, and a port number of the grand master device.

During actual application, the first device may establish security connections to grand master devices in a plurality of TSN working domains, to obtain correspondences between second domain numbers and grand master device identifiers of the plurality of TSN working domains. The first device may store correspondences between a plurality of grand master device identifiers and corresponding second domain numbers.

S1002: The second device sends a time sensitive network message, where the time sensitive network message includes a first domain number and the grand master device identifier of the TSN working domain.

The second device sends the time sensitive network message, and a plurality of devices in a 5G network may receive the time sensitive network message from the second device.

S1003: The first device receives the time sensitive network message from the second device through a first communication network.

It may be understood that, if the first device is the network-side TSN translator (NW-TT) 110 shown in FIG. 1 and the second device is the TSN grand master device 1111 shown in FIG. 1, it indicates that the time sensitive network message is transmitted through a time sensitive network (for example, the TSN working domain 111), so that the NW-TT 110 receives the time sensitive network message from the TSN grand master device 1111, that is, the first communication network is a time sensitive network.

In some embodiments, another device (for example, a device near the NW-TT or a TSN application function (application function, AF) device) may be further deployed between the first device and the second device, that is, the first communication network may further include the device near the NW-TT and/or the TSN AF device. The time sensitive network message is transparently transmitted through the another device, so that the first device receives the time sensitive network message from the second device. If no other device is deployed between the first device and the second device, the first device is directly connected to the second device, the time sensitive network message does not need to be transparently transmitted through another device, and the first device receives the time sensitive network message from the second device.

S1004: The first device determines the grand master device identifier of the TSN working domain.

The time sensitive network message includes the grand master device identifier. After receiving the time sensitive network message, the first device obtains the grand master device identifier from the time sensitive network message.

S1005: The first device obtains, based on the grand master device identifier, the second domain number from a correspondence that is between a grand master device of a TSN working domain and a corresponding second domain number and that is stored on the first device.

The first device queries, from a plurality of correspondences stored on the first device and based on the grand master device identifier, a grand master device correspondence that includes the grand master device identifier in the time sensitive network message, to obtain the second domain number.

The correspondence between the grand master device identifier and the second domain number of the TSN working domain may be presented in a form of a table, as shown in Table 3.

**Table 3**

| Correspondence | Grand master device identifier | Domain number |
|---|---|---|
| Correspondence 1 | Grand master device identifier 1 | Domain number 1 |
| Correspondence 2 | Grand master device identifier 2 | Domain number 2 |
| Correspondence 3 | Grand master device identifier 3 | Domain number 3 |

It can be learned from Table 3 that the correspondence 1 includes the grand master device identifier 1 and the domain number 1, the correspondence 2 includes the grand master device identifier 2 and the domain number 2, and the correspondence 3 includes the grand master device identifier 3 and the domain number 3. If the time sensitive network message received by the first device includes the grand master device identifier 2, the first device queries Table 1 based on the grand master device identifier 2, determines the correspondence 2 that includes the grand master device identifier 2 and the domain number 2, and then obtains the domain number 2 associated with the grand master device identifier 2 and uses the domain number 2 as the second domain number.

It should be noted that Table 3 shows a storage form of the correspondence between the grand master device identifier and the second domain number of the TSN working domain on a storage device merely in a form of a table, but does not limit a storage form of the correspondence on the storage device. Certainly, the correspondence may alternatively be stored on the storage device in another form.

S1006: The first device checks the first domain number based on the second domain number of the TSN working domain.

The first device may compare the first domain number with the second domain number. If the first domain number is the same as the second domain number, it indicates that the check succeeds, and the first domain number included in the time sensitive network message is a valid domain number. If the first domain number is different from the second domain number, it indicates that the check fails, and the first domain number included in the time sensitive network message is an invalid domain number.

If the check succeeds, S1007 is performed. If the check fails, the first device discards the time sensitive network message, and the process ends, or the first device performs S 1008.

S1007: The first device transmits the time sensitive network message.

The first device may transmit the time sensitive network message to UE or a DS-TT, that is, a DS-TT (for example, the DS-TT 107) or a terminal device (for example, the terminal device 103) on which a DS-TT program is installed, by using a core network device and a radio access network device in the 5G network. The UE or the DS-TT transmits the time sensitive network message to a TSN end-station, and the TSN end-station performs clock synchronization with the second device based on the grand master information included in the time sensitive network message. The second device is a grand master device in the TSN working domain indicated by the first domain number included in the time sensitive network message.

In this way, the correspondence between the second domain number and the grand master device identifier of the TSN working domain is configured on a device in the 5G network. When subsequently receiving a new domain number of the TSN working domain in a time sensitive network message, the device in the 5G network checks authenticity of the new domain number of the TSN working domain by using a valid domain number of the TSN working domain as a reference. If the check succeeds, it is ensured that a TSN end-station performs clock synchronization with the grand master device in the TSN working domain based on authentic grand master information included in the time sensitive network message. This avoids a problem that the TSN end-station performs clock synchronization by using a forged grand master, causing a clock synchronization exception, a system failure, a network attack to a system, or the like.

S1008: The first device sends a check failure message to the second device.

The check failure message may include a failure cause. In some embodiments, the first device may preconfigure a plurality of failure cause values, and one failure cause value indicates one failure cause. A value of a bit in the check failure message may be used to indicate a failure cause value, to notify the second device that the transmission of the time sensitive network message fails.

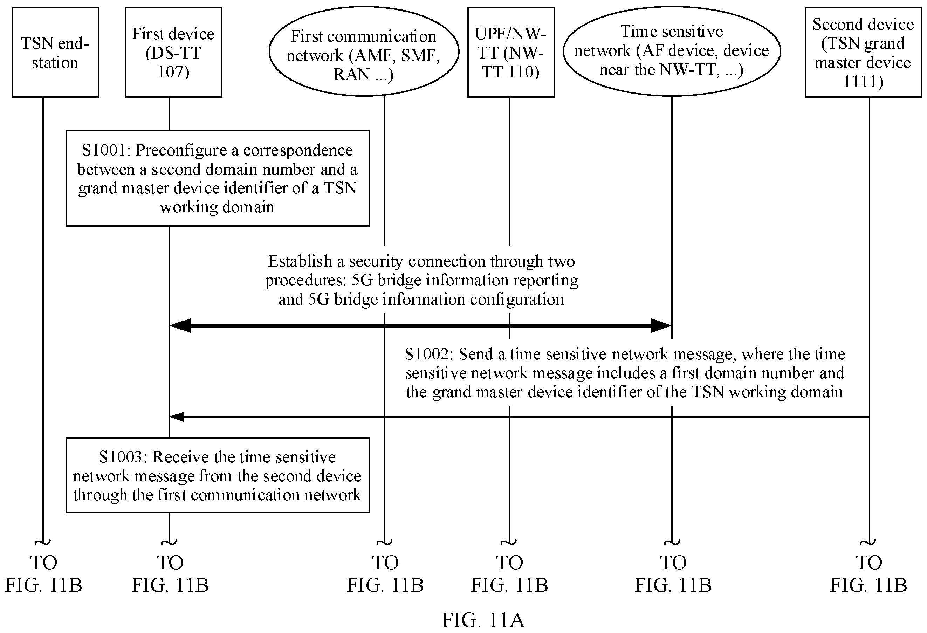

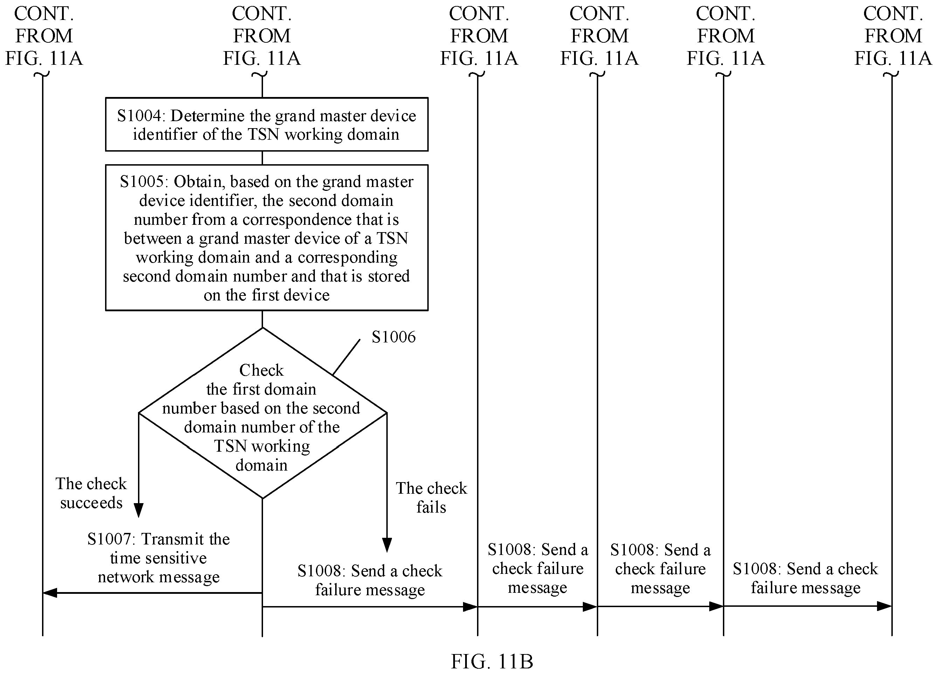

FIG. 11A and FIG. 11B are a flowchart of another message transmission method according to an embodiment not part of the invention. A difference from the embodiment shown in FIG. 10A and FIG. 10B lies in that, an example in which a first device is an ingress device for receiving a time sensitive network message in a 5G network is used for description in FIG. 10A and FIG. 10B, and an example in which a first device is an egress device for receiving a time sensitive network message in a 5G network is used for description in this embodiment. The first device (UE or a DS-TT) configures a correspondence between a second domain number and a grand master device identifier of a TSN working domain. For example, if the first device is the device-side TSN translator (DS-TT) 107 shown in FIG. 1 and a second device is the TSN grand master device 1111 shown in FIG. 1, it indicates that a time sensitive network message is transmitted through the 5G network, so that the DS-TT 107 receives the time sensitive network message from the TSN grand master device 1111, that is, a first communication network is the 5G network. For detailed explanations of a process of transmitting the time sensitive network message, refer to explanations of related steps in the embodiment shown in FIG. 10A and FIG. 10B.

A correspondence between a grand master device identifier and a valid domain number of a TSN working domain may alternatively be centrally configured in a TSN AF, a TSN centralized network configuration (centralized network configuration, TSN CNC), or an SMF in a 5G network. Then a grand master device dynamically delivers the correspondence to a UPF or an NW-TT or to UE or a DS-TT before sending a time sensitive network message. After the UPF/NW-TT or the UE/DS-TT subsequently receives a time sensitive network message that includes a new domain number, the UPF/NW-TT or the UE/DS-TT checks authenticity of the new domain number of the TSN working domain by using the valid domain number of the TSN working domain as a reference. If the check succeeds, it is ensured that a TSN end-station performs clock synchronization with the grand master device in the TSN working domain based on authentic grand master information included in the time sensitive network message. This avoids a problem that the TSN end-station performs clock synchronization by using a forged grand master, causing a clock synchronization exception, a system failure, a network attack to a system, or the like.

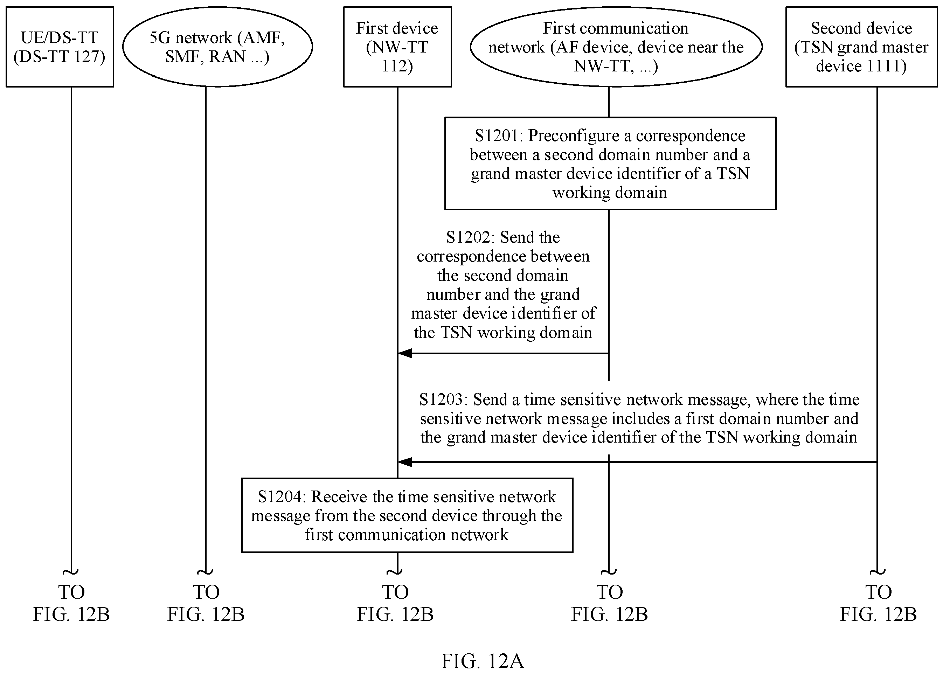

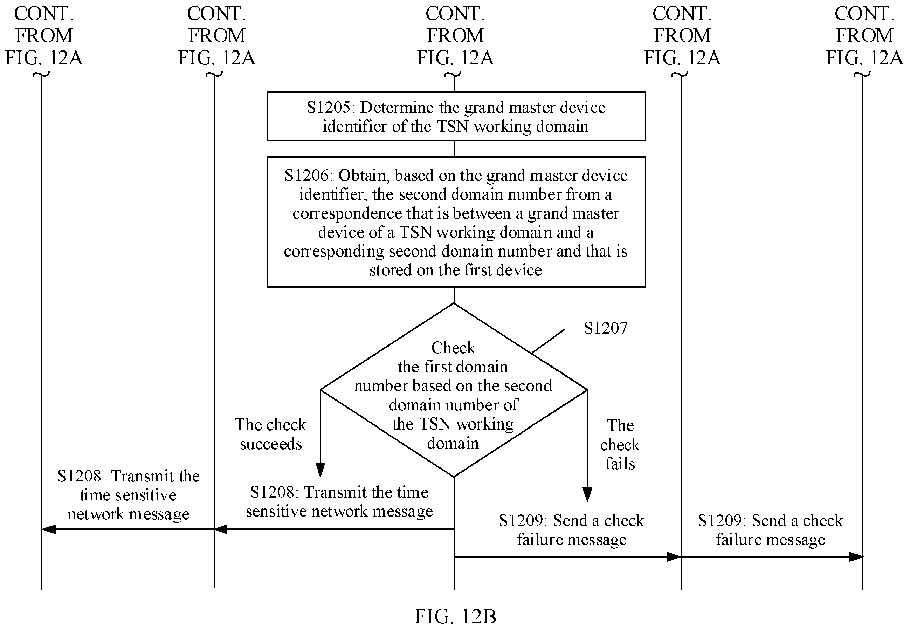

FIG. 12A and FIG. 12B are a flowchart of a message transmission method according to an embodiment not part of the claimed invention. A difference from the embodiment shown in FIG. 10A and FIG. 10B lies in that a TSN CNC centrally configures a correspondence between a grand master device identifier and a second domain number of a TSN working domain, and then the TSN CNC sends the correspondence to a TSN AF by using a traffic forwarding information message. Alternatively, the TSN AF centrally configures a correspondence between a grand master device identifier and a second domain number of a TSN working domain (S1201 is performed). Before a second device sends a time sensitive network message, the TSN CNC or the TSN AF dynamically delivers the correspondence to a first device (S1202 is performed). The TSN AF sends the correspondence to a PCF by using an AF request procedure (AF request procedure). The PCF sends the correspondence to an SMF by using an SM policy control update notify (SM policy control update notify) procedure. The first device establishes a PDU session modification procedure to UE or a DS-TT. The SMF sends the correspondence to a UPF or an NW-TT by using an N4 session modification request (N4 session modification request). The UPF or the NW-TT stores the correspondence. The UPF or the NW-TT returns an N4 session modification response (N4 session modification response) message to the SMF. Therefore, the first device queries for the second domain number of the TSN working domain based on the grand master device identifier, and checks a first domain number, received from the second device, of the TSN working domain, to ensure authenticity of the first domain number of the TSN working domain. For detailed descriptions of S1203 to S1209, refer to the descriptions of S 1002 to S1008 in FIG. 10A and FIG. 10B.

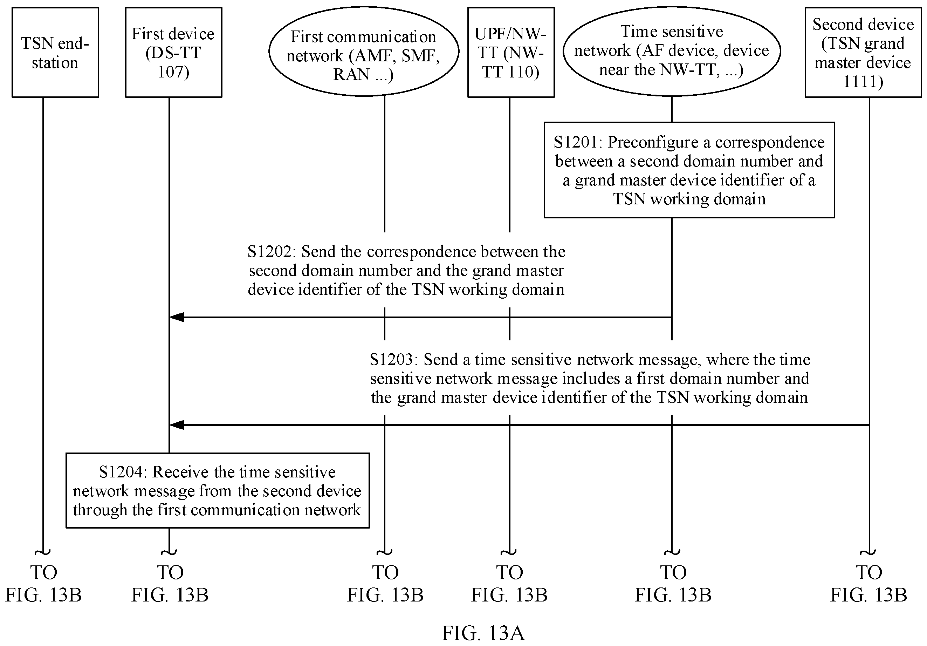

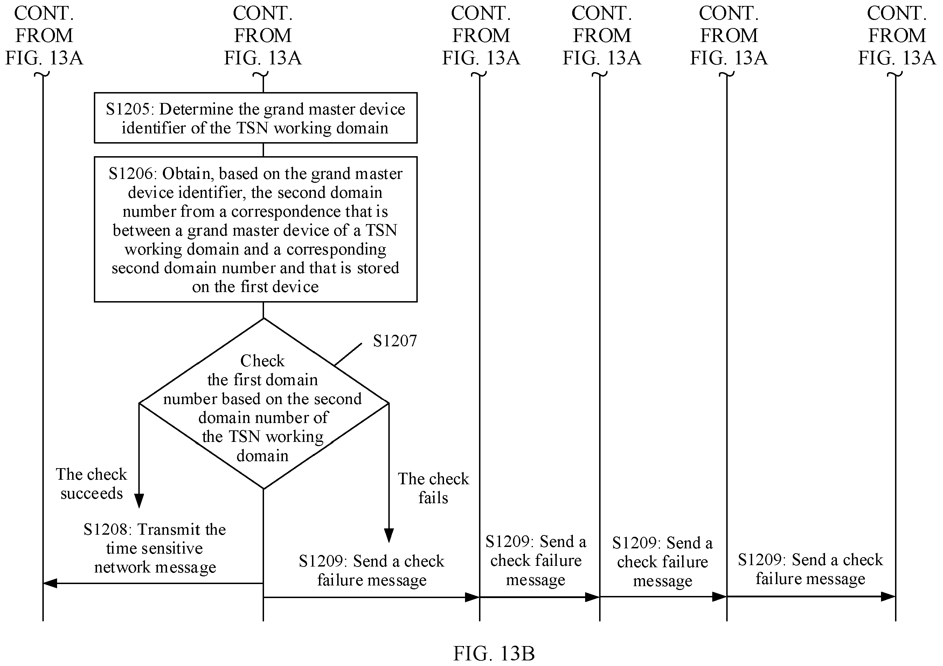

FIG. 13A and FIG. 13B are a flowchart of another message transmission method according to an embodiment not part of the invention. A difference from the embodiment shown in FIG. 12A and FIG. 12B lies in that, an example in which a first device is an ingress device for receiving a time sensitive network message in a 5G network is used for description in FIG. 12A and FIG. 12B, and an example in which a first device is an egress device for receiving a time sensitive network message in a 5G network is used for description in this embodiment. After an SMF receives a correspondence that is between a grand master device identifier and a second domain number of a TSN working domain and that is sent by a UPF or an NW-TT, the SMF sends the correspondence to an AMF via an Namf_Communication_N1N2 Message Transfer request. The AMF sends an Namf_Communication_N1N2 Message Transfer response to the SMF. The AMF sends an N2 message to a RAN, where the N2 message includes the correspondence between the grand master device identifier and the second domain number of the TSN working domain. The RAN sends the correspondence to the first device (UE or a DS-TT) via an RRC connection reconfiguration message. Optionally, the AMF may send a NAS message to the first device (the UE or the DS-TT), where the NAS message includes the correspondence. The first device (the UE or the DS-TT) stores the correspondence between the grand master device identifier and the second domain number of the TSN working domain. Therefore, the first device queries for the second domain number of the TSN working domain based on the grand master device identifier, and checks a first domain number, received from a second device, of the TSN working domain, to ensure authenticity of the first domain number of the TSN working domain. For detailed descriptions of S1203 to S1209, refer to the descriptions of S1002 to S1008 in FIG. 10A and FIG. 10B. For detailed explanations of a process of transmitting a time sensitive network message, refer to explanations of related steps in the embodiment shown in FIG. 12A and FIG. 12B.

In some other embodiments not part of the claimed invention. an SMF centrally configures a correspondence between a grand master device identifier and a second domain number of a TSN working domain. After UE or a DS-TT establishes a security connection to a UPF or an NW-TT through two procedures: 5G bridge information reporting (5G bridge information reporting) and 5G bridge information configuration (5G bridge information configuration), the SMF may determine whether a current PDU session is used for TSN communication. If the current PDU session is used for TSN communication, the SMF sends the correspondence to the UPF or the NW-TT for storage. Then the UPF or the NW-TT queries for the second domain number of the TSN working domain based on a grand master device identifier, and checks, received from a second device, a first domain number of the TSN working domain, to ensure authenticity of the first domain number of the TSN working domain. For a specific check process, refer to the descriptions in the foregoing embodiments.

It may be understood that, to implement the functions in the foregoing embodiments, a network device and a terminal device include corresponding hardware structures and/or software modules for performing the functions. A person skilled in the art should be easily aware that this application can be implemented by hardware or a combination of hardware and computer software in combination with the units and the method steps in the examples described in embodiments disclosed in this application. Whether a function is performed by hardware or hardware driven by computer software depends on particular application scenarios and design constraints of technical solutions.

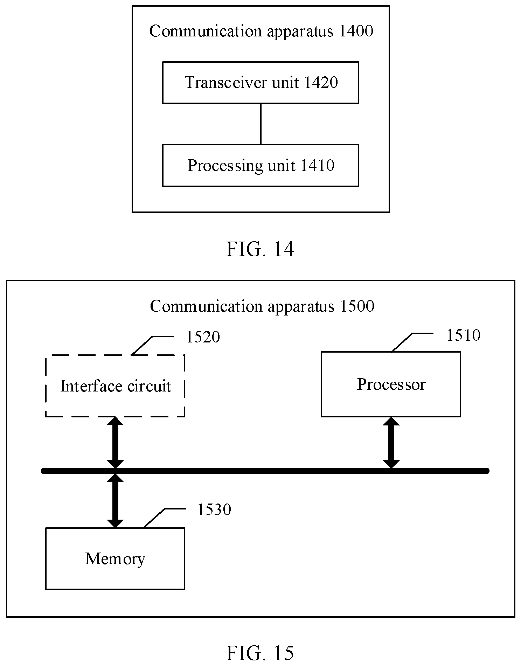

FIG. 14 and FIG. 15 are schematic diagrams of possible structures of communication apparatuses according to embodiments of this application. These communication apparatuses may be configured to implement the functions of the first device or the second device in the foregoing method embodiments, and therefore can also achieve the advantageous effects of the foregoing method embodiments. In this embodiment of this application, the communication apparatus may be the network-side TSN translator 110 or the device-side TSN translator 107 shown in FIG. 1, or may be the TSN grand master device 1111, the TSN grand master device 1051, or the TSN grand master device 1081 shown in FIG. 1, or may be a module (for example, a chip) used in these devices.

As shown in FIG. 14, the communication apparatus 1400 includes a processing unit 1410 and a transceiver unit 1420. The communication apparatus 1400 is configured to implement the functions of the first device or the second device in the method embodiment shown in any one of FIG. 2A and FIG. 2B to FIG. 13A and FIG. 13B.

The transceiver unit in the communication apparatus performs processing related to information sending and receiving, and the processing unit performs processing other than the sending and the receiving. The following are some examples of specific processing performed by the processing unit and the transceiver unit.

When the communication apparatus 1400 is configured to implement the functions of the second device in the method embodiment shown in FIG. 2A and FIG. 2B, or FIG. 3A and FIG. 3B, the transceiver unit 1420 is configured to perform S201 and S202.

When the communication apparatus 1400 is configured to implement the functions of the first device in the method embodiment shown in FIG. 2A and FIG. 2B, or FIG. 3A and FIG. 3B, the transceiver unit 1420 is configured to perform S203, S207, and S208, and the processing unit 1410 is configured to perform S204 to S206.

When the communication apparatus 1400 is configured to implement the functions of the second device in the method shown in FIG. 4A and FIG. 4B, or FIG. 5A and FIG. 5B, the transceiver unit 1420 is configured to perform S401 and S402.

When the communication apparatus 1400 is configured to implement the functions of the first device in the method shown in FIG. 4A and FIG. 4B, or FIG. 5A and FIG. 5B, the transceiver unit 1420 is configured to perform S403, S408, and S409, and the processing unit 1410 is configured to perform S404 to S407.

When the communication apparatus 1400 is configured to implement the functions of the second device in the method embodiment shown in FIG. 6A, FIG. 6B, and FIG. 6C, or FIG. 7A, FIG. 7B, and FIG. 7C, the transceiver unit 1420 is configured to perform S602, S603, S608, S613, and S614.

When the communication apparatus 1400 is configured to implement the functions of the first device in the method embodiment shown in FIG. 6A, FIG. 6B, and FIG. 6C, or FIG. 7A, FIG. 7B, and FIG. 7C, the transceiver unit 1420 is configured to perform S615, S618, and S619, and the processing unit 1410 is configured to perform S616 and S617.

When the communication apparatus 1400 is configured to implement the functions of the second device in the method embodiment shown in FIG. 8A and FIG. 8B, or FIG. 9A and FIG. 9B, the transceiver unit 1420 is configured to perform S801 and S803, and the processing unit 1410 is configured to perform S802.

When the communication apparatus 1400 is configured to implement the functions of the first device in the method embodiment shown in FIG. 8A and FIG. 8B, or FIG. 9A and FIG. 9B, the transceiver unit 1420 is configured to perform S804, S806, and S807, and the processing unit 1410 is configured to perform S805.

When the communication apparatus 1400 is configured to implement the functions of the second device in the method shown in FIG. 10A and FIG. 10B, or FIG. 11A and FIG. 11B, the transceiver unit 1420 is configured to perform S1002.

When the communication apparatus 1400 is configured to implement the functions of the first device in the method shown in FIG. 10A and FIG. 10B, or FIG. 11A and FIG. 11B, the transceiver unit 1420 is configured to perform S1003, S1007, and S1008, and the processing unit 1410 is configured to perform S1004 and S1005.

When the communication apparatus 1400 is configured to implement the functions of the second device in the method shown in FIG. 12A and FIG. 12B, or FIG. 13A and FIG. 13B, the transceiver unit 1420 is configured to perform S1203.

When the communication apparatus 1400 is configured to implement the functions of the first device in the method shown in FIG. 12A and FIG. 12B, or FIG. 13A and FIG. 13B, the transceiver unit 1420 is configured to perform S1204, S1208, and S1209, and the processing unit 1410 is configured to perform S1205 to S1207.

For more detailed descriptions of the processing unit 1410 and the transceiver unit 1420, directly refer to related descriptions in the method embodiments shown in FIG. 2A and FIG. 2B to FIG. 13A and FIG. 13B. Details are not described herein again.

As shown in FIG. 15, the communication apparatus 1500 includes a processor 1510 and an interface circuit 1520. The processor 1510 and the interface circuit 1520 are coupled to each other. It may be understood that the interface circuit 1520 may be a transceiver or an input/output interface. Optionally, the communication apparatus 1500 may further include a memory 1530, configured to store instructions executed by the processor 1510, or store input data required by the processor 1510 to run instructions, or store data generated after the processor 1510 runs instructions.

When the communication apparatus 1500 is configured to implement the methods shown in FIG. 2A and FIG. 2B to FIG. 13A and FIG. 13B, the processor 1510 is configured to perform the functions of the processing unit 1410, and the interface circuit 1520 is configured to perform the functions of the transceiver unit 1420.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor or the like.

The method steps in embodiments of this application may be implemented by hardware, or may be implemented by the processor executing software instructions. The software instructions may include corresponding software modules. The software modules may be stored in a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may exist in the network device or the terminal device as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, all or some of the processes or the functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible to a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD).

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A message transmission method, comprising:
receiving, by a first device, a time sensitive network message from a second device through a first communication network, wherein the time sensitive network message comprises a first domain number of a time sensitive network, TSN, working domain (105, 108, 111) in which the second device is located;
determining, by the first device, a grand master device identifier of the time sensitive network working domain (105, 108, 111); and
obtaining, by the first device based on the grand master device identifier, a second domain number from a grand master device certificate, stored on the first device, of the time sensitive network working domain (105, 108, 111), wherein the grand master device certificate comprises the grand master device identifier and the second domain number;
checking, by the first device, authenticity of the first domain number using the second domain number of the time sensitive network working domain (105, 108, 111) as a reference; and
transmitting, by the first device, the time sensitive network message if the check succeeds.

2. The method according to claim 1, wherein before the obtaining the second domain number, the method further comprises:
obtaining, by the first device, the grand master device certificate in a process of establishing a security connection to the second device.

3. The method according to claim 1 or 2, wherein the grand master device identifier comprises at least one of the following: a grand master identifier of a grand master device (1051, 1081, 1111), a MAC address of the grand master device (1051, 1081, 1111), an IP address of the grand master device (1051, 1081, 1111), a fully qualified domain name, FQDN, of the grand master device (1051, 1081, 1111), and a port number of the grand master device (1051, 1081, 1111).

4. The method according to any one of claims 1 to 3, wherein that the check succeeds comprises: the first domain number is the same as the second domain number.

5. A message transmission method, comprising:
receiving, by a first device, a time sensitive network message from a second device through a first communication network, wherein the time sensitive network message comprises a first domain number and a digital signature of a time sensitive network working domain (105, 108, 111) in which the second device is located, and the digital signature is obtained, by the second device, by signing a second domain number of the time sensitive network working domain (105, 108, 111),
obtaining, by the first device based on the first domain number, a grand master device certificate of the time sensitive network working domain (105, 108, 111) from a plurality of locally stored grand master device certificates, wherein the grand master device certificate comprises the second domain number of the time sensitive network working domain (105, 108, 111) and a public key; and
obtaining, by the first device, the public key from the grand master device certificate of the time sensitive network working domain (105, 108, 111), and verifying the digital signature by using the public key, to ensure authenticity of the first domain number; and
transmitting, by the first device, the time sensitive network message if the verification succeeds.

6. The method according to claim 5, wherein before the obtaining, by the first device based on the first domain number, a grand master device certificate of the time sensitive network working domain (105, 108, 111) from locally stored grand master device certificates, the method further comprises:
obtaining, by the first device, the grand master device certificate of the time sensitive network working domain (105, 108, 111) in a process of establishing a security connection to the second device.

7. The method according to any one of claims 1 to 6, wherein the second device is a grand master device (1051, 1081, 1111); and
when the first device performs downlink clock synchronization with the second device, the first communication network is a time sensitive network, and the first device is a user plane function or a network-side TSN translator (110); or
the first communication network is a fifth-generation, 5G, network, and the first device is user equipment or a device-side TSN translator (107); and/or
when the first device performs uplink clock synchronization with the second device, the first communication network is a time sensitive network, and the first device is user equipment or a device-side TSN translator (107); or
the first communication network is a 5G network, and the first device is a user plane function or a network-side TSN translator (110).

8. A message transmission method, comprising:
signing, by a second device, a second domain number of a time sensitive network working domain (105, 108, 111) in which the second device is located, by using a private key corresponding to a public key of a grand master device certificate of the time sensitive network working domain (105, 108, 111), to obtain a digital signature; and
sending, by the second device, a time sensitive network message to a first device through a first communication network, wherein the time sensitive network message comprises a first domain number and the digital signature of the time sensitive network working domain (105, 108, 11) to be verified to ensure authenticity of the first domain.

9. The method according to claim 8, wherein the second device is a grand master device (1051, 1081, 1111); and
when the first device performs downlink clock synchronization with the second device, the first communication network is a time sensitive network, and the first device is a user plane function or a network-side TSN translator (110); or
the first communication network is a fifth-generation, 5G, network, and the first device is user equipment or a device-side TSN translator (107); and/or
when the first device performs uplink clock synchronization with the second device, the first communication network is a time sensitive network, and the first device is user equipment or a device-side TSN translator (107); or
the first communication network is a 5G network, and the first device is a user plane function or a network-side TSN translator (110).

10. A communication apparatus (1400, 1500), comprising a processor (1510) and an interface circuit (1520), wherein the interface circuit (1520) is configured to receive a signal from a communication apparatus (1400, 1500) other than the communication apparatus (1400, 1500) and transmit the signal to the processor (1510), or send a signal that comes from the processor (1510) to a communication apparatus (1400, 1500) other than the communication apparatus (1400, 1500), and the processor (1510) is configured to implement, by using a logic circuit or by executing code instructions, the method according to any one of claims 1 to 7.

11. A communication apparatus (1400, 1500), comprising a processor (1510) and an interface circuit (1520), wherein the interface circuit (1520) is configured to receive a signal from a communication apparatus (1400, 1500) other than the communication apparatus (1400, 1500) and transmit the signal to the processor (1510), or send a signal that comes from the processor (1510) to a communication apparatus (1400, 1500) other than the communication apparatus (1400, 1500), and the processor (1510) is configured to implement, by using a logic circuit or by executing code instructions, the method according to any one of claims 8 to 9.

12. A system comprising the communication apparatus (1400, 1500) according to claim 10 and the communication apparatus (1400, 1500) according to claim 11.

13. A computer program product, wherein the computer program product includes computer program code, and when the computer program code is run, a first device is caused to perform the method of any one of claims 1 to 7.

14. A computer program product, wherein the computer program product includes computer program code, and when the computer program code is run, a second device is caused to perform the method of claim 8 or 9.

## Patentansprüche

1. Nachrichtenübertragungsverfahren, umfassend:
Empfangen, durch eine erste Vorrichtung, einer zeitkritischen Netzwerknachricht von einer zweiten Vorrichtung über ein erstes Kommunikationsnetzwerk, wobei die zeitkritische Netzwerknachricht eine erste Domänennummer einer Arbeitsdomäne (105, 108, 111) eines zeitkritischen Netzwerks, TSN, umfasst, in der sich die zweite Vorrichtung befindet;
Bestimmen, durch die erste Vorrichtung, einer Grand-Master-Vorrichtungskennung der zeitkritischen Netzwerkarbeitsdomäne (105, 108, 111); und
Erlangen, durch die erste Vorrichtung basierend auf der Grand-Master-Vorrichtungskennung, einer zweiten Domänennummer aus einem auf der ersten Vorrichtung gespeicherten Grand-Master-Vorrichtungszertifikat der zeitkritischen Netzwerkarbeitsdomäne (105, 108, 111), wobei das Grand-Master-Vorrichtungszertifikat die Grand-Master-Vorrichtungskennung und die zweite Domänennummer umfasst;
Überprüfen, durch die erste Vorrichtung, der Authentizität der ersten Domänennummer unter Verwendung der zweiten Domänennummer der zeitkritischen Netzwerkarbeitsdomäne (105, 108, 111) als Referenz; und
Übertragen, durch die erste Vorrichtung, der zeitkritischen Netzwerknachricht, wenn die Prüfung erfolgreich ist.

2. Verfahren nach Anspruch 1, wobei das Verfahren vor dem Erlangen der zweiten Domänennummer ferner Folgendes umfasst:
Erlangen, durch die erste Vorrichtung, des Grand-Master-Vorrichtungszertifikats in einem Prozess zur Herstellung einer Sicherheitsverbindung zur zweiten Vorrichtung.

3. Verfahren nach Anspruch 1 oder 2, wobei die Grand-Master-Vorrichtungskennung mindestens eine der folgenden Angaben umfasst: eine Grand-Master-Kennung einer Grand-Master-Vorrichtung (1051, 1081, 1111), eine MAC-Adresse der Grand-Master-Vorrichtung (1051, 1081, 1111), eine IP-Adresse der Grand-Master-Vorrichtung (1051, 1081, 1111), ein vollqualifizierter Domänenname (FQDN) der Grand-Master-Vorrichtung (1051, 1081, 1111) und eine Portnummer der Grand-Master-Vorrichtung (1051, 1081, 1111).

4. Verfahren nach einem der Ansprüche 1 bis 3, wobei eine erfolgreiche Prüfung Folgendes umfasst: die erste Domänennummer stimmt mit der zweiten Domänennummer überein.

5. Nachrichtenübertragungsverfahren, umfassend:
Empfangen, durch eine erste Vorrichtung, einer zeitkritischen Netzwerknachricht von einer zweiten Vorrichtung über ein erstes Kommunikationsnetzwerk, wobei die zeitkritische Netzwerknachricht eine erste Domänennummer und eine digitale Signatur einer zeitkritischen Netzwerkarbeitsdomäne (105, 108, 111) umfasst, in der sich die zweite Vorrichtung befindet, und die digitale Signatur von der zweiten Vorrichtung durch Signieren einer zweiten Domänennummer der zeitkritischen Netzwerkarbeitsdomäne (105, 108, 111) erlangt wird;
Erlangen, durch die erste Vorrichtung basierend auf der ersten Domänennummer, eines Grand-Master-Vorrichtungszertifikats der zeitkritischen Netzwerkarbeitsdomäne (105, 108, 111) aus einer Vielzahl lokal gespeicherter Grand-Master-Vorrichtungszertifikate, wobei das Grand-Master-Vorrichtungszertifikat die zweite Domänennummer der zeitkritischen Netzwerkarbeitsdomäne (105, 108, 111) und einen öffentlichen Schlüssel umfasst; und
Erlangen, durch die erste Vorrichtung, des öffentlichen Schlüssels vom Grand-Master-Vorrichtungszertifikat der zeitkritischen Netzwerkdomäne (105, 108, 111), und Überprüfen der digitale Signatur mittels des öffentlichen Schlüssels, um die Authentizität der ersten Domänennummer sicherzustellen; und Übertragen, durch die erste Vorrichtung, der zeitkritischen Netzwerknachricht, wenn die Verifizierung erfolgreich ist.

6. Verfahren nach Anspruch 5, wobei vor dem Erlangen, durch die erste Vorrichtung basierend auf der ersten Domänennummer, eines Grand-Master-Vorrichtungszertifikats der zeitkritischen Netzwerkarbeitsdomäne (105, 108, 111) aus lokal gespeicherten Grand-Master-Vorrichtungszertifikaten das Verfahren ferner Folgendes umfasst:
Erlangen, durch die erste Vorrichtung, des Grand-Master-Vorrichtungszertifikats der zeitkritischen Netzwerkarbeitsdomäne (105, 108, 111) in einem Prozess zur Herstellung einer Sicherheitsverbindung zur zweiten Vorrichtung.

7. Verfahren nach einem der Ansprüche 1 bis 6, wobei es sich bei der zweiten Vorrichtung um eine Grand-Master-Vorrichtung (1051, 1081, 1111) handelt; und
wenn die erste Vorrichtung eine Downlink-Taktsynchronisation mit der zweiten Vorrichtung durchführt, es sich beim ersten Kommunikationsnetzwerk um ein zeitkritisches Netzwerk handelt, und die erste Vorrichtung eine Benutzerebenenfunktion oder ein netzwerkseitiger TSN-Übersetzer (110) ist; oder
das erste Kommunikationsnetz ein 5G-Netz der fünften Generation ist, und die erste Vorrichtung ein Benutzergerät oder ein geräteseitiger TSN-Übersetzer (107) ist; und/oder
wenn die erste Vorrichtung eine Uplink-Taktsynchronisation mit der zweiten Vorrichtung durchführt, es sich beim ersten Kommunikationsnetzwerk um ein zeitkritisches Netzwerk handelt, und die erste Vorrichtung ein Benutzergerät oder ein netzwerkseitiger TSN-Übersetzer (107) ist; oder
das erste Kommunikationsnetzwerk ein 5G-Netzwerk ist, und die erste Vorrichtung eine Benutzerebenenfunktion oder ein netzwerkseitiger TSN-Übersetzer (110) ist.

8. Nachrichtenübertragungsverfahren, umfassend:
Signieren, durch eine zweite Vorrichtung, einer zweiten Domänennummer einer zeitkritischen Netzwerkdomäne (105, 108, 111), in der sich die zweite Vorrichtung befindet, unter Verwendung eines privaten Schlüssels, der einem öffentlichen Schlüssel eines Grand-Master-Vorrichtungszertifikats der zeitkritischen Netzwerkdomäne (105, 108, 111) entspricht, um eine digitale Signatur zu erlangen; und
Senden, durch die zweite Vorrichtung, einer zeitkritischen Netzwerknachricht an eine erste Vorrichtung über ein erstes Kommunikationsnetzwerk, wobei die zeitkritische Netzwerknachricht eine erste Domänennummer und die digitale Signatur der zeitkritischen Netzwerkarbeitsdomäne (105, 108, 11) umfasst, die zur Sicherstellung der Authentizität der ersten Domäne überprüft werden.

9. Verfahren nach Anspruch 8, wobei es sich bei der zweiten Vorrichtung um eine Grand-Master-Vorrichtung (1051, 1081, 1111) handelt; und
wenn die erste Vorrichtung eine Downlink-Taktsynchronisation mit der zweiten Vorrichtung durchführt, es sich beim ersten Kommunikationsnetzwerk um ein zeitkritisches Netzwerk handelt, und die erste Vorrichtung eine Benutzerebenenfunktion oder ein netzwerkseitiger TSN-Übersetzer (110) ist; oder
das erste Kommunikationsnetz ein 5G-Netz der fünften Generation ist, und die erste Vorrichtung ein Benutzergerät oder ein geräteseitiger TSN-Übersetzer (107) ist; und/oder
wenn die erste Vorrichtung eine Uplink-Taktsynchronisation mit der zweiten Vorrichtung durchführt, es sich beim ersten Kommunikationsnetzwerk um ein zeitkritisches Netzwerk handelt, und die erste Vorrichtung ein Benutzergerät oder ein netzwerkseitiger TSN-Übersetzer (107) ist; oder
das erste Kommunikationsnetzwerk ein 5G-Netzwerk ist, und die erste Vorrichtung eine Benutzerebenenfunktion oder ein netzwerkseitiger TSN-Übersetzer (110) ist.

10. Kommunikationsvorrichtung (1400, 1500), umfassend einen Prozessor (1510) und eine Schnittstellenschaltung (1520), wobei die Schnittstellenschaltung (1520) so konfiguriert ist, dass sie ein Signal von einer anderen Kommunikationsvorrichtung (1400, 1500) als der Kommunikationsvorrichtung (1400, 1500) empfängt und das Signal an den Prozessor (1510) weiterleitet oder ein vom Prozessor (1510) kommendes Signal an eine andere Kommunikationsvorrichtung (1400, 1500) als die Kommunikationsvorrichtung (1400, 1500) sendet, und der Prozessor (1510) so konfiguriert ist, dass er mittels einer Logikschaltung oder durch Ausführung von Codeanweisungen das Verfahren nach einem der Ansprüche 1 bis 7 implementiert.

11. Kommunikationsvorrichtung (1400, 1500), umfassend einen Prozessor (1510) und eine Schnittstellenschaltung (1520), wobei die Schnittstellenschaltung (1520) so konfiguriert ist, dass sie ein Signal von einer anderen Kommunikationsvorrichtung (1400, 1500) als der Kommunikationsvorrichtung (1400, 1500) empfängt und das Signal an den Prozessor (1510) weiterleitet oder ein vom Prozessor (1510) kommendes Signal an eine andere Kommunikationsvorrichtung (1400, 1500) als die Kommunikationsvorrichtung (1400, 1500) sendet, und der Prozessor (1510) so konfiguriert ist, dass er mittels einer Logikschaltung oder durch Ausführung von Codeanweisungen das Verfahren nach einem der Ansprüche 8 bis 9 implementiert.

12. System, umfassend die Kommunikationsvorrichtung (1400, 1500) nach Anspruch 10 und die Kommunikationsvorrichtung (1400, 1500) nach Anspruch 11.

13. Computerprogrammprodukt, wobei das Computerprogrammprodukt einen Computerprogrammcode beinhaltet, und wenn der Computerprogrammcode ausgeführt wird, eine erste Vorrichtung veranlasst wird, das Verfahren nach einem der Ansprüche 1 bis 7 durchzuführen.

14. Computerprogrammprodukt, wobei das Computerprogrammprodukt einen Computerprogrammcode beinhaltet, und wenn der Computerprogrammcode ausgeführt wird, eine zweite Vorrichtung veranlasst wird, das Verfahren nach den Ansprüchen 8 oder 9 durchzuführen.

## Revendications

1. Procédé de transmission de messages comprenant :
la réception, par un premier dispositif, d'un message réseau sensible au temps provenant d'un second dispositif par le biais d'un premier réseau de communication, dans lequel le message réseau sensible au temps comprend un premier numéro de domaine d'un domaine de travail réseau sensible au temps, TSN, (105, 108, 111) dans lequel le second dispositif est situé ;
la détermination, par le premier dispositif, d'un identifiant de dispositif grand maître du domaine de travail réseau sensible au temps (105, 108, 111) ; et
l'obtention, par le premier dispositif basé sur l'identifiant du dispositif grand maître, d'un second numéro de domaine à partir d'un certificat de dispositif grand maître, stocké sur le premier dispositif, du domaine de travail réseau sensible au temps (105, 108, 111), dans lequel le certificat de dispositif grand maître comprend l'identifiant du dispositif grand maître et le second numéro de domaine ;
la vérification, par le premier dispositif, de l'authenticité du premier numéro de domaine à l'aide comme référence du second numéro de domaine du domaine de travail réseau sensible au temps (105, 108, 111) ; et
la transmission, par le premier dispositif, du message réseau sensible au temps si la vérification réussit.

2. Procédé selon la revendication 1, dans lequel avant l'obtention du second numéro de domaine, le procédé comprend également :
l'obtention, par le premier dispositif, du certificat du dispositif grand maître dans le cadre d'un processus d'établissement d'une connexion de sécurité avec le second dispositif.

3. Procédé selon la revendication 1 ou 2, dans lequel l'identifiant de dispositif grand maître comprend au moins l'un d'un identifiant grand maître d'un dispositif grand maître (1051, 1081, 1111), d'une adresse MAC du dispositif grand maître (1051, 1081, 1111), d'une adresse IP du dispositif grand maître (1051, 1081, 1111), d'un nom de domaine pleinement qualifié (FQDN) du dispositif grand maître (1051, 1081, 1111) et d'un numéro de port du dispositif grand maître (1051, 1081, 1111).

4. Procédé selon l'une quelconque des revendications 1 à 3, dans lequel la vérification réussit, comprend : le premier numéro de domaine est le même que le second numéro de domaine.

5. Procédé de transmission de messages, comprenant :
la réception, par un premier dispositif, d'un message réseau sensible au temps provenant d'un second dispositif par le biais d'un premier réseau de communication, dans lequel le message réseau sensible au temps comprend un premier numéro de domaine et une signature numérique d'un domaine de travail réseau sensible au temps (105, 108, 111) dans lequel se trouve le second dispositif, et la signature numérique est obtenue, par le second dispositif, en signant un second numéro de domaine du domaine de travail réseau sensible au temps (105, 108, 111) ;
l'obtention, par le premier dispositif basé sur le premier numéro de domaine, d'un certificat de dispositif grand maître du domaine de travail réseau sensible au temps (105, 108, 111) à partir d'une pluralité de certificats de dispositif grand maître stockés localement, dans lequel le certificat de dispositif grand maître comprend le second numéro de domaine du domaine de travail réseau sensible au temps (105, 108, 111) et une clé publique ; et
l'obtention, par le premier dispositif, de la clé publique du certificat du dispositif grand maître du domaine de travail réseau sensible au temps (105, 108, 111), et la vérification de la signature numérique à l'aide de la clé publique, afin de garantir l'authenticité du premier numéro de domaine ; et
la transmission, par le premier dispositif, du message réseau sensible au temps si la vérification réussit.

6. Procédé selon la revendication 5, dans lequel, avant l'obtention, par le premier dispositif basé sur le premier numéro de domaine, d'un certificat de dispositif grand maître du domaine de travail réseau sensible au temps (105, 108, 111) à partir de certificats de dispositif grand maître stockés localement, le procédé comprend également :
l'obtention, par le premier dispositif, du certificat de dispositif grand maître du domaine de travail réseau sensible au temps (105, 108, 111) dans un processus d'établissement d'une connexion de sécurité au second dispositif.

7. Procédé selon l'une quelconque des revendications 1 à 6, dans lequel le second dispositif est un dispositif grand maître (1051, 1081, 1111) ; et
lorsque le premier dispositif réalise une synchronisation d'horloge en liaison descendante avec le second dispositif, le premier réseau de communication est un réseau sensible au temps, et le premier dispositif est une fonction du plan utilisateur ou un traducteur TSN côté réseau (110) ; ou
le premier réseau de communication est un réseau de cinquième génération, 5G, et le premier dispositif est un équipement utilisateur ou un traducteur TSN côté dispositif (107) ; et/ou lorsque le premier dispositif réalise une synchronisation d'horloge en liaison montante avec le second dispositif, le premier réseau de communication est un réseau sensible au temps, et le premier dispositif est un équipement utilisateur ou un traducteur TSN côté dispositif (107) ; ou
le premier réseau de communication est un réseau 5G, et le premier dispositif est une fonction de plan utilisateur ou un traducteur TSN côté réseau (110).

8. Procédé de transmission de messages, comprenant :
la signature, par un second dispositif, d'un second numéro de domaine d'un domaine de travail réseau sensible au temps (105, 108, 111) dans lequel se trouve le second dispositif, à l'aide d'une clé privée correspondant à une clé publique d'un certificat de dispositif grand maître du domaine de travail réseau sensible au temps (105, 108, 111), pour obtenir une signature numérique ; et
l'envoi, par le second dispositif, d'un message réseau sensible au temps à un premier dispositif par le biais d'un premier réseau de communication, dans lequel le message réseau sensible au temps comprend un premier numéro de domaine et la signature numérique du domaine de travail réseau sensible au temps (105, 108, 11) à vérifier pour garantir l'authenticité du premier domaine.

9. Procédé selon la revendication 8, dans lequel le second dispositif est un dispositif grand maître (1051, 1081, 1111) ; et
lorsque le premier dispositif réalise une synchronisation d'horloge en liaison descendante avec le second dispositif, le premier réseau de communication est un réseau sensible au temps, et le premier dispositif est une fonction du plan utilisateur ou un traducteur TSN côté réseau (110) ; ou
le premier réseau de communication est un réseau de cinquième génération, 5G, et le premier dispositif est un équipement utilisateur ou un traducteur TSN côté dispositif (107) ; et/ou lorsque le premier dispositif réalise une synchronisation d'horloge en liaison montante avec le second dispositif, le premier réseau de communication est un réseau sensible au temps, et le premier dispositif est un équipement utilisateur ou un traducteur TSN côté dispositif (107) ; ou
le premier réseau de communication est un réseau 5G, et le premier dispositif est une fonction de plan utilisateur ou un traducteur TSN côté réseau (110).

10. Appareil de communication (1400, 1500), comprenant un processeur (1510) et un circuit d'interface (1520), dans lequel le circuit d'interface (1520) est configuré pour recevoir un signal provenant d'un appareil de communication (1400, 1500) autre que l'appareil de communication (1400, 1500) et transmettre le signal au processeur (1510), ou envoyer un signal provenant du processeur (1510) à un appareil de communication (1400, 1500) autre que l'appareil de communication (1400, 1500), et le processeur (1510) est configuré pour mettre en œuvre, à l'aide d'un circuit logique ou en exécutant des instructions de code, le procédé selon l'une quelconque des revendications 1 à 7.

11. Appareil de communication (1400, 1500), comprenant un processeur (1510) et un circuit d'interface (1520), dans lequel le circuit d'interface (1520) est configuré pour recevoir un signal provenant d'un appareil de communication (1400, 1500) autre que l'appareil de communication (1400, 1500) et transmettre le signal au processeur (1510), ou envoyer un signal provenant du processeur (1510) à un appareil de communication (1400, 1500) autre que l'appareil de communication (1400, 1500), et le processeur (1510) est configuré pour mettre en œuvre, à l'aide d'un circuit logique ou en exécutant des instructions de code, le procédé selon l'une quelconque des revendications 8 à 9.

12. Système comprenant l'appareil de communication (1400, 1500) selon la revendication 10 et l'appareil de communication (1400, 1500) selon la revendication 11.

13. Produit de programme informatique, dans lequel le produit de programme informatique comporte un code de programme informatique, et lorsque le code de programme informatique est exécuté, un premier dispositif est amené à réaliser le procédé selon l'une quelconque des revendications 1 à 7.

14. Produit de programme informatique, dans lequel le produit de programme informatique comporte un code de programme informatique, et lorsque le code de programme informatique est exécuté, un second dispositif est amené à réaliser le procédé selon la revendication 8 ou 9.
